(19) Europäisches Patentamt / European Patent Office / Office européen des brevets

(11) **EP 3 237 204 B1**

(12) **EUROPÄISCHE PATENTSCHRIFT**

(45) Veröffentlichungstag und Bekanntmachung des Hinweises auf die Patenterteilung:
**17.04.2019   Patentblatt 2019/16**

(51) Int Cl.:
*B32B 25/08* (2006.01)     *B32B 27/34* (2006.01)
*C08L 9/00* (2006.01)     *C08L 21/00* (2006.01)
*C08L 23/20* (2006.01)     *C08L 77/00* (2006.01)
*C08L 77/02* (2006.01)     *C08L 77/06* (2006.01)

(21) Anmeldenummer: **15823505.1**

(22) Anmeldetag: **18.12.2015**

(86) Internationale Anmeldenummer:
**PCT/EP2015/080627**

(87) Internationale Veröffentlichungsnummer:
**WO 2016/102393 (30.06.2016 Gazette 2016/26)**

(54) **VERBUND**

COMPOSITE

COMPOSITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014   DE 202014010030 U**

(43) Veröffentlichungstag der Anmeldung:
**01.11.2017   Patentblatt 2017/44**

(73) Patentinhaber: **Lanxess Deutschland GmbH
50569 Köln (DE)**

(72) Erfinder:
 • **DEDERICHS, Thomas
   50679 Köln (DE)**
 • **FRÜH, Thomas
   42115 Wuppertal (DE)**
 • **THUST, Torsten
   51061 Köln (DE)**
 • **GIESE, Ulrich
   30519 Hannover (DE)**
 • **TEICH, Sebastian
   30519 Hannover (DE)**

(56) Entgegenhaltungen:
EP-A1- 0 512 488     EP-A1- 1 902 865
EP-A1- 2 455 232     WO-A1-2011/138300
WO-A1-2014/096392     US-A- 5 484 848
US-A- 5 844 043

**Beschreibung**

Die Erfindung betrifft einen Verbund in Direkthaftung aus mindestens einem Teilstück aus mindestens einer Polyamidformmasse und mindestens einem Teilstück aus wenigstens einem Elastomer, vorzugsweise erhältlich aus mit elementarem Schwefel zu vulkanisierenden bzw. zu vernetzenden Kautschuk wobei wenigstens ein Teilstück das Gemisch aus Polyoctenamer und Polybutadien enthält.

Die einzelnen Teilstücke des Verbunds sind makroskopische Formteile, nicht jedoch z. B. dispergierte Partikel in einem Kunststoff-Elastomer-Blend oder Polyamid-Fasern in einer Elastomer-Matrix. Solche Blends sind daher keine Verbundteile im Sinne der Erfindung.

**Stand der Technik**

Verbundteile aus steifen thermoplastischen sowie gummielastischen Formteilen werden üblicherweise durch Kleben, Verschrauben, mechanisches Verkrallen oder unter Verwendung eines Haftvermittlers zusammengefügt, da bei den weitaus meisten Kombinationen von Thermoplast und Elastomer keine ausreichend feste Haftung erzielt werden kann.

Im Stand der Technik gibt es zahlreiche Offenbarungen für einen Verbund aus Polyamid und Elastomer, erhältlich aus mit elementarem Schwefel zu vulkanisierenden bzw. zu vernetzenden Kautschuk, unter Verwendung von Haftvermittlern. Der Haftvermittler wird auf die Komponente, entweder Thermoplast oder Elastomer, aufgetragen, die zuerst gefertigt wurde. Wird die Thermoplast Komponente zuerst hergestellt, wird der Haftvermittler auf die Oberfläche des Thermoplasten aufgetragen, danach wird die zu vernetzende Kautschukmischung aufgespritzt und vulkanisiert. Wird das Elastomer zuerst gefertigt, wird der Haftvermittler auf dessen Oberfläche aufgetragen, bevor der Thermoplast aufgespritzt wird. Abhängig von der Materialkombination kommt es zur Anwendung eines Ein-Schicht- oder eines Zwei-Schicht-Haftsystems. Üblicherweise und bevorzugt einzusetzende Haftvermittler sind in J. Schnetger "Lexikon der Kautschuktechnik", 3. Auflage, Hüthig Verlag Heidelberg, 2004, Seite 203, und in B. Crowther, "Handbook of Rubber Bonding", iSmithers Rapra Publishing, 2001, Seiten 3 bis 55, erwähnt. Besonders bevorzugt wird wenigstens ein Haftvermittler der Marke Chemlok® oder Chemosil® (Fa. Lord) oder der Marke Cilbond® (Fa. CIL) eingesetzt. Bei der Verwendung von Haftvermittlern ist prinzipiell die Verwendung von umweltschädlichen Lösungsmitteln und/oder Schwermetallen problematisch, sofern keine wasserbasierenden Haftvermittler eingesetzt werden. Generell stellt auch der Auftrag eines Haftvermittlers einen zusätzlichen Arbeitsschritt dar, der einen zusätzlichen Arbeitsgang und somit Zeit und Aufwand erfordert.

Aus WO 2014/096392 A1 ist ein Verbundteil und dessen Herstellung bekannt, das in Direkthaftung aus mindestens einem Teilstück hergestellt aus mindestens einer Polyamidformmasse und mindestens einem Teilstück hergestellt aus wenigstens einem Elastomer unter Verzicht auf jeglichen Haftvermittler zusammengesetzt ist, indem die Polyamidformmasse zu mindestens 30 Gew.-%,eine Mischung von

   a) 60 bis 99,9 Gew.-Teile Polyamid sowie
   b) 0,1 bis 40 Gew.-Teile Polyalkenamer enthält,

wobei die Summe der Gew.-Teile von a) und b) 100 beträgt, das Elastomer Teilstück aus mit elementarem Schwefel als Vernetzungsmittel zu vernetzen bzw. zu vulkanisierenden Kautschuk hergestellt wurde, und als Polyalkenamer wenigstens eines aus der Gruppe Polybutadien, Polyisopren, Polyoctenamer (Polyoctenylen), Polynorbornen (Poly-1,3-cyclopentylen-vinylen) und Polydicyclopentadien ausgewählt wird.

Im Bestreben, die Verbundhaftung Polyamid basierter Erzeugnisse zu Schwefel vernetzten Komponenten zu verbessern wurde nun überraschend gefunden, dass eine Mischung aus Polyoctenamer und Polybutadien nochmals zu einer deutlichen Steigerung derselben führt.

**Erfindung**

Gegenstand der Erfindung ist ein Verbund in Direkthaftung aus mindestens einem Teilstück hergestellt aus mindestens einer Polyamidformmasse und mindestens einem Teilstück hergestellt aus wenigstens einem Elastomer, wobei wenigstens ein Teilstück das Gemisch von Polyoctenamer und Polybutadien enthält.

Überraschenderweise führt der Einsatz des Gemisches aus Polyoctenamer und Polybutadien in der Polyamidkomponente zu einer Steigerung der Haftfestigkeit eines Verbunds beider Teilstücke zueinander, also wenigstens einem Teilstück hergestellt aus einer Polyamidformmasse und wenigstens einem Teilstück hergestellt aus wenigstens einem Elastomer, wie sie durch Einsatz der individuellen Komponenten nicht zu erzielen ist, wobei hohe Haftwerte mit einer Haftfestigkeit in einer 90°-Schälprüfung in Anlehnung an DIN ISO 813 von deutlich über 3 N/mm erzielt werden.

Zudem verfügt der erfindungsgemäße Verbund aus wenigstens einem Polyamid Teilstück und wenigstens einem Elastomer Teilstück über eine Haftung, die auch bei hoher Temperatur, z. B. 120°C, und unter dem Einfluss von unpolaren Medien, z. B. Lagerung in unpolaren Lösungsmitteln, insbesondere Toluol, stabil ist.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Sofern nicht anders angegeben sind alle Prozentangaben Gewichtsprozente. Die Begriffe Verbund und Verbundteil werden im Rahmen der vorliegenden Erfindung synonym verwendet. Für den Begriff Teilstück aus Kautschuk wird im Rahmen der vorliegenden Anmeldung auch einfach Elastomer-Teilstück verwendet. Die im Rahmen der vorliegenden Erfindung genutzten Normen werden in ihrer jeweils zum Anmeldetag dieser Anmeldung geltenden Fassung verwendet.

Die vorliegende Erfindung betrifft aber auch ein Verfahren zur Steigerung der Haftfestigkeit eines Verbunds in Direkthaftung, der bevorzugt ohne Haftvermittler zusammengesetzt ist, aus wenigstens einem Polyamid basierten Teilstück und wenigstens einem Teilstück hergestellt aus Kautschuk, vorzugsweise mit elementarem Schwefel als Vernetzungsmittel zu vernetzenden bzw. zu vulkanisierenden Kautschuk, dadurch gekennzeichnet, dass die Formmasse wenigstens eines Teilstücks, vorzugsweise die Formmasse des wenigstens einen Polyamid basierten Teilstücks, mit einem Gemisch enthaltend Polyoctenamer und Polybutadien additiviert wird.

Gegenstand der vorliegenden Anmeldung ist aber auch die Verwendung eines Gemisches von Polyoctenamer und Polybutadien, bevorzugt in Polyamiden, zur Steigerung der Haftfestigkeit eines Verbunds in Direkthaftung, der, bevorzugt ohne Haftvermittler, zusammengesetzt ist aus wenigstens einem Polyamid basierten Teilstück und wenigstens einem Teilstück aus Kautschuk hergestellt ist, vorzugsweise aus mit elementarem Schwefel als Vernetzungsmittel zu vernetzenden bzw. zu vulkanisierenden Kautschuk.

Gegenstand der Erfindung ist aber auch das Gemisch aus Polyoctenamer und Polybutadien sowie dessen Verwendung, bevorzugt als Masterbatch, zur Herstellung eines oben beschriebenen Verbunds. Ein Masterbatch ist gemäß http://de.wikipedia.org/wiki/Masterbatch ein Kunststoffadditiv in Form von Granulaten mit Gehalten an Additiven, wobei die Gehalte höher sind, als in der Endanwendung. Ein erfindungsgemäß einzusetzender Masterbatch wird hier dem Polyamid zur Veränderung von dessen Eigenschaften - hier der Verbesserung der Haftfestigkeit zur Kautschuk Komponente - beigemischt. Masterbatches erhöhen dabei im Vergleich zu Pasten, Pulver oder flüssigen Zusatzstoffen die Prozesssicherheit und sind sehr gut zu verarbeiten.

Gegenstand der vorliegenden Erfindung sind aber auch Erzeugnisse, insbesondere flüssige Medien oder gasförmige Medien führende Erzeugnisse, enthaltend wenigstens einen erfindungsgemäßen Verbund bzw. die Verwendung der erfindungsgemäßen Verbunde in flüssige Medien oder gasförmige Medien führenden Erzeugnissen, bevorzugt in der chemischen Industrie, der Haushaltsgeräteindustrie oder der Kraftfahrzeugindustrie. Insbesondere bevorzugt werden die erfindungsgemäßen Verbunde als Dichtungen, Membranen, Gasdruckspeicher, Schläuche, Gehäuse für Motoren, Pumpen und elektrisch betriebene Werkzeuge, Walzen, Reifen, Kupplungen, Anschlagpuffer, Transportbänder, Treibriemen, Mehrschicht-Laminate und Mehrschicht-Folien sowie schall- oder schwingungsdämpfende Bauteile eingesetzt.

Die vorliegende Erfindung betrifft zudem ein Verfahren zur Abdichtung von flüssige Medien und/oder gasförmige Medien beinhaltenden Erzeugnissen unter Einsatz wenigstens eines erfindungsgemäßen Verbunds.

## Bevorzugte Ausführungen der Erfindung

Erfindungsgemäß bevorzugt wird die für das Polyamid Teilstück zu verarbeitende Formmasse mit einem Gemisch enthaltend Polyoctenamer und Polybutadien additiviert. Besonders bevorzugt weist das Polyoctenamer eine Viskositätszahl J im Bereich von 100 bis 150 ml/g aufweist, vorzugsweise im Bereich von 120 bis 140 ml/g.

Bevorzugt betrifft die Erfindung einen Verbund in Direkthaftung aus mindestens einem Teilstück hergestellt aus mindestens einer Polyamidformmasse und mindestens einem Teilstück hergestellt aus wenigstens einem Elastomer, in dem die Polyamidformmasse zu mindestens 30 Gew.-%,eine Mischung von Polyamid, Polyoctenamer und Polybutadien enthält und das Elastomer Teilstück aus mit elementarem Schwefel als Vernetzungsmittel zu vernetzenden bzw. zu vulkanisierenden Kautschuk hergestellt wird.

Vorzugsweise betrifft die Erfindung einen Verbund in Direkthaftung aus mindestens einem Teilstück hergestellt aus mindestens einer Polyamidformmasse und mindestens einem Teilstück hergestellt aus wenigstens einem Elastomer, in dem die Polyamidformmasse zu mindestens 30 Gew.-% eine Mischung von

a) 60 bis 99,9 Gew.-Teile Polyamid sowie
b) 0,1 bis 40 Gew.-Teile Polyoctenamer und Polybutadien enthält,

wobei die Summe der Gew.-Teile von a) und b) 100 beträgt und das Elastomer Teilstück aus mit elementarem Schwefel als Vernetzungsmittel zu vernetzenden bzw. zu vulkanisierenden Kautschuk hergestellt wird.

Zur Klarstellung sei angemerkt, dass in den Fällen, in denen die Polyamidformmasse zu mindestens 30 Gew.-% eine Mischung von a) und b) enthält, die Polyamidformmasse zudem jeweils abhängig von der tatsächlich eingesetzten Menge der Komponenten a) und b) bis zu 70 Gew.-% Additive enthält, vorzugsweise wenigstens ein Additiv der später genannten Komponenten (I) bis (VIII). Für den Fall, dass die Polyamidformmasse zu 100 Gew.-% aus den Komponenten a) und b) besteht, sind keine weiteren Additive enthalten.

Besonders bevorzugt betrifft die vorliegende Erfindung einen Verbund in Direkthaftung aus mindestens einem Teilstück hergestellt aus mindestens einer Polyamidformmasse und mindestens einem Teilstück hergestellt aus wenigstens einem Elastomer **unter Verzicht auf jeglichen Haftvermittler**, in dem die Polyamidformmasse zu mindestens 30 Gew.-% eine Mischung von

a) 60 bis 99,9 Gew.-Teile Polyamid sowie
b) 0,1 bis 40 Gew.-Teile Polyoctenamer und Polybutadien enthält,

wobei die Summe der Gew.-Teile von a) und b) 100 beträgt und das Elastomer Teilstück aus mit elementarem Schwefel als Vernetzungsmittel zu vernetzenden bzw. zu vulkanisierenden Kautschuk hergestellt wird.

Ganz besonders bevorzugt betrifft die vorliegende Erfindung einen Verbund, der in Direkthaftung aus mindestens einem Teilstück hergestellt aus mindestens einer Polyamidformmasse und mindestens einem Teilstück hergestellt aus wenigstens einem Elastomer, insbesondere unter Verzicht auf jeglichen Haftvermittler, zusammengesetzt ist, dadurch gekennzeichnet, dass die Polyamidformmasse zu mindestens 30 Gew.-%, bevorzugt zu mindestens 45 Gew.-%, besonders bevorzugt zu mindestens 55 Gew.-% und insbesondere bevorzugt zu mindestens 65 Gew.-% eine Mischung von

a) 60 bis 99,9 Gew.-Teile, bevorzugt 75 bis 99,8 Gew.-Teile und besonders bevorzugt 85 bis 99,7 Gew.-Teile und ganz besonders bevorzugt 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile ganz besonders bevorzugt 0,5 bis 12 Gew.-Teile eines Gemisches aus Polyoctenamer und Polybutadien enthält,

wobei die Summe der Gew.-Teile von a) und b) 100 beträgt und das Elastomer Teilstück aus mit elementarem Schwefel als Vernetzungsmittel zu vernetzenden bzw. zu vulkanisierenden Kautschuk hergestellt wird.

Bevorzugt betrifft die Erfindung ein Verfahren zur Steigerung der Haftfestigkeit eines Verbunds, der bevorzugt ohne Haftvermittler zusammengesetzt ist, aus mindestens einem Polyamid basierten Teilstück und mindestens einem Teilstück hergestellt aus mit elementarem Schwefel als Vernetzungsmittel zu vernetzenden bzw. zu vulkanisierenden Kautschuk, dadurch gekennzeichnet, dass die für das Polyamid Teilstück zu verarbeitende Formmasse mit einem Gemisch enthaltend Polyoctenamer und Polybutadien additiviert wird und danach der Verbund durch wenigstens ein Formgebungsverfahren der Reihe Extrusion, Flachfolienextrustion, Folienblasen, Extrusionsblasformen, Coextrusion, Kalandrieren, Gießen, Pressverfahren, Spritzprägeverfahren, Transferpressverfahren, Transferspritzpressverfahren oder Spritzgießen oder dessen Sonderverfahren, insbesondere Gas-Injektionstechnik, bevorzugt durch 2-Komponenten-Spritzgießen, hergestellt wird.

Bei diesem Verfahren wird entweder bevorzugt das Teilstück aus der Polyamidformmasse mit einer elementaren Schwefel enthaltenden Kautschuk Komponente beaufschlagt und den Vulkanisationsbedingungen des Kautschuks ausgesetzt, oder bevorzugt das Teilstück aus mit elementarem Schwefel als Vernetzungsmittel vernetztem Elastomer mit einer Polyamidformmasse beaufschlagt.

**Polyoctenamer**

Insbesondere bevorzugt wird der Polyamidformmasse des Polyamid Teilstücks als Polyoctenamer das 1,8-trans-Polyoctenamer zugesetzt, wofür im Rahmen der vorliegenden Erfindung die Abkürzung TOR (1,8-trans-polyoctenamer rubber) verwendet wird. Das erfindungsgemäß insbesondere bevorzugt einzusetzende 1,8-trans-Polyoctenamer [CAS Nr. 28730-09-8], auch als trans-Polyoctenylen bezeichnet, erhält man durch ringöffnende Metathese-Polymerisation aus Cycloocten und es umfasst sowohl makrocyclische als auch lineare Polymere. TOR ist ein niedermolekularer Spezial-Kautschuk mit bimodaler Molekulargewichtsverteilung. Die bimodale Molekulargewichtsverteilung des TOR kommt dadurch zustande, dass die niedermolekularen Bestandteile in der Regel in einem gewichtsmittleren Molekulargewichtsbereich von 200 bis 6.000 g/mol, die hochpolymeren Bestandteile in einem gewichtsmittleren Molekulargewichtsbereich von 8.000 bis 400.000 g/mol liegen (A. Dräxler, Kautschuk, Gummi, Kunststoffe, 1981, Jahrgang 34, Ausgabe 3, Seite 185 bis 190).

Das Molekulargewicht wird im Rahmen der vorliegenden Erfindung durch Viskositätsmessung mit einem Kapillarviskosimeter bestimmt. Die Lösungsviskosität ist ein Maß für das mittlere Molekulargewicht eines Kunststoffs. Die Bestimmung erfolgt an gelöstem Polymer, wobei unterschiedliche Lösungsmittel, insbesondere Ameisensäure, m-Kresol, Tetrachlorethan, etc., und Konzentrationen zum Einsatz kommen. Die Messung im Kapillarviskosimeter liefert die Viskositätszahl J (ml/g).

Aus Viskositätsmessungen in Lösung bestimmt man den K-Wert, ein Molekülparameter, mit dem die Fließeigenschaften von Kunststoffen bestimmt werden können.

Wenn η = Viskosität, so gilt vereinfacht: [η] = 2,303 • (75 $k^2$ + k) mit K-Wert = 1000 k. Die Bestimmung der Viskositätszahl J kann danach einfach aus dem K-Wert nach DIN 53726

$$J = \left(\frac{\eta}{\eta_0} - 1\right) \cdot \frac{1}{c}$$

durchgeführt werden. Für die Praxis existieren Umrechnungstabellen K-Wert in Viskositätszahl J, wobei K-Wert und Viskositätszahl sich proportional zu den mittleren Molekülmassen der Polymere verhalten.

Durch die Viskositätszahl J ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Das Verfahren ist für gängige Kunststoffe genormt, zum Beispiel in der *DIN EN ISO 307* für Polyamide und der *DIN ISO 1628-5* für Polyester.

Das erfindungsgemäß einzusetzende 1,8-trans-Polyoctenamer, wird gemäß der EP 0 508 056 A1 hergestellt. Das gewichtsmittlere Molekulargewicht Mw des erfindungsgemäß bevorzugt einzusetzenden 1,8-trans-Polyoctenamers liegt bevorzugt im Bereich von 80.000 bis 120.000 g/mol, besonders bevorzugt bei ca. 90.000 g/mol.

Die Bestimmung der Viskositätszahl J erfolgt erfindungsgemäß nach ISO 1628-1 bei 23°C:

10 g Polyoctenamer in 1 l Toluol lösen;
Messgerät Schott Visco System AVS 500;
Kapillar-Typ Nr. 53713 von Fa. Schott.

In einer bevorzugten Ausführungsform liegt der Kristallinitätsanteil des erfindungsgemäß bevorzugt einzusetzenden 1,8-trans-Polyoctenamers bei Raumtemperatur (25°C) im Bereich von 20 bis 30%. Erfindungsgemäß insbesondere bevorzugt wird 1,8-trans-Polyoctenamer-Kautschuk mit einem gewichtsmittleren Molekulargewicht Mw von 90.000 g/mol und einem trans/cis Doppelbindungsverhältnis von 80:20, also Vestenamer® 8012, eingesetzt.

Im Handel erhältlich ist 1,8-trans-Polyoctenamer als Vestenamer® 8012, laut Herstellerangaben ein 1,8-trans-Polyoctenamer-Kautschuk mit einem gewichtsmittleren Molekulargewicht Mw von 90.000 g/mol und einem trans/cis Doppelbindungsverhältnis von 80:20, sowie einer Viskositätszahl J, gemessen nach ISO 1628-1 bei 23°C, von 120 ml/g, hier benannt als Cyclooocten-Homopolymer [CAS Nr. 25267-51-0], sowie Vestenamer® 6213, laut Herstellerangaben ein 1,8-trans-Polyoctenamer-Kautschuk mit einem gewichtsmittleren Molekulargewicht von Mw 1,1 • $10^5$ g/mol und einem trans/cis-Doppelbindungsverhältnis im Bereich von 62:38, sowie einer Viskositätszahl J, gemessen nach ISO 1628-1 bei 23°C, von 130 ml/g, (Product Information der Evonik Industries AG, Marl, Deutschland; Handbook of Elastomers, hrsg. von A. K. Bhowmick, H. L. Stephens, 2. überarbeitete Auflage, Marcel Dekkers Inc. New York, 2001, Seite 698 bis 703).

Erfindungsgemäß wird das Polyoctenamer in der Polyamidformmasse für das Polyamid Teilstück in Kombinationen mit Polybutadien eingesetzt, vorzugsweise in Form eines Masterbatch.

**Polybutadien**

Polybutadien (BR) [CAS Nr. 9003-17-2] umfasst insbesondere zwei unterschiedliche Polybutadien-Typklassen. Die erste Klasse weist einen 1,4-cis-Gehalt von mindestens 90% auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt (Houben-Weyl, Methoden der Organischen Chemie, Thieme Verlag, Stuttgart, 1987, Band E 20, Seiten 798 bis 812; Ullmann's Encyclopedia of Industrial Chemistry, Vol A 23, Rubber 3. Synthetic, VCH Verlagsgesellschaft mbH, D-69451 Weinheim, 1993, S. 239-364). Die zweite Polybutadien-Typklasse wird mit Li- oder Na-Katalysatoren hergestellt und weist 1,2-Vinylgehalte von 10% bis 95% auf.

Polybutadiene mit einem niedrigen Molekulargewicht können bei Raumtemperatur flüssig sein. Generell können flüssige Polybutadiene über eine Synthese, das heißt einem Aufbau des Molekulargewichts, oder über einen Abbau von Polybutadien mit einem höheren Molekulargewicht hergestellt werden. Synthetisch können flüssige Polybutadiene wie oben beschrieben über Ziegler-Natta-Polymerisation, oder über anionische Polymerisation dargestellt werden (H.-G. Elias, "Macromolecules, Volume 2: Industrial Polymers and Syntheses", WILEY-VCH Verlag GmbH, Weinheim, 2007, S. 242 bis 245; H.-G. Elias, "Macromolecules, Volume 4: Applications of Polymers", WILEY-VCH Verlag GmbH, Weinheim, 2007, S. 284 bis 285).

Bevorzugt werden Polybutadiene mit einem zahlenmittleren Molekulargewicht Mn im Bereich von 800 bis 20.000 g/mol, besonders bevorzugt im Bereich von 1.500 bis 15.000 g/mol, ganz besonders bevorzugt im Bereich von 2.000 bis 9.000 g/mol, und/oder mit einer dynamischen Viskosität, gemessen mit der Kegel-Platten-Methode nach DIN 53019, bei Normaldruck und bei einer Temperatur von 25°C im Bereich von 100 bis 15.000 mPas, besonders bevorzugt im Bereich von 300 bis 10.000 mPas, ganz besonders bevorzugt im Bereich von 500 bis 5.000 mPas eingesetzt. Diese zeichnen sich dadurch aus, dass sie bei Raumtemperatur (25°C) flüssig sind. Derartige flüssige Polybutadiene werden beispielsweise von der Firma Synthomer Ltd., Harlow, Essex, UK, als Lithene® angeboten, insbesondere Lithene® ultra N4-5000, ein flüssiges Polybutadien mit einer dynamischen Viskosität bei 25°C (DIN 53019) von 4.240 mPas mit einem zahlenmittleren Molekulargewicht Mn im Bereich von 5.000 g/mol (Herstellerangabe) (siehe Synthomer Ltd., Lithene® Liquid Polybutadiene, Product Range, Harlow, Essex, UK). Alternative einzusetzende Flüssig-Polybutadiene werden von der Firma Evonik Industries AG, Marl, Deutschland, unter dem Namen Polyvest®, insbesondere Polyvest® 110, ein flüssiges Polybutadien mit einer dynamischen Viskosität bei 25°C (DIN 53019) von 650 mPas und einem zahlenmittleren Molekulargewicht Mn im Bereich von 2.600 g/mol (Herstellerangabe), oder von der Firma Kuraray Europe GmbH, Hattersheim am Main, Deutschland, unter dem Namen LBR, insbesondere LBR-307B [CAS Nr. 9003-17-2], ein flüssiges Polybutadien mit einer dynamischen Viskosität bei 25°C (DIN 53019) von 2.210 mPas und einem gewichtsmittleren Molekulargewicht Mw im Bereich von 8.000 g/mol (Herstellerangabe) (siehe Kuraray Europe GmbH, Kuraray Liquid Rubber, Hattersheim am Main, Deutschland), angeboten. Die Liste der bevorzugt zu verwendenden Flüssig-Polybutadiene ist nicht auf die angegebenen Produkte und Hersteller beschränkt. Es können auch Alternativen eingesetzt werden.

Bevorzugt werden das Polyoctenamer und das Polybutadien in einem Massenverhältnis im Bereich von 1 Teil Polyoctenamer zu 20 Teilen Polybutadien bis 30 Teile Polyoctenamer zu 1 Teil Polybutadien, besonders bevorzugt in einem Massenverhältnis im Bereich von 1 Teil Polyoctenamer zu 10 Teilen Polybutadien bis 20 Teile Polyoctenamer zu 1 Teil Polybutadien, ganz besonders bevorzugt in einem Massenverhältnis im Bereich von 1 Teil Polyoctenamer zu 5 Teilen Polybutadien bis 10 Teile Polyoctenamer zu 1 Teil Polybutadien eingesetzt.

In einer bevorzugten Ausführungsform zeichnet sich die Polyamid Komponente dadurch aus, dass sie kein Coagenz enthält. Coagenzien werden für die peroxidische Vernetzung von Kautschuken eingesetzt und führen zu einer gesteigerten Vernetzungsausbeute. Chemisch sind Coagenzien mehrfach funktionelle Verbindungen, die mit Polymerradikalen reagieren und stabilere Radikale bilden (F. Röthemeyer, F. Sommer "Kautschuktechnologie", 2. Überarbeitete Auflage, Carl Hanser Verlag München Wien, 2006, Seite 315 bis 317; J. Schnetger "Lexikon der Kautschuktechnik" 3. Auflage, Hüthig Verlag Heidelberg, 2004, Seite 82 bis 83). In einer bevorzugten Ausführungsform zeichnet sich die Polyamid Komponente dadurch aus, dass sie kein Coagenz der Reihe Ethylenglycoldimethacrylat (EDMA), Trimethylolpropantrimethacrylat (TMPTMA, TRIM), Trimethylolpropantriacrylat (TMPTA), 1,6-Hexandioldiacrylat (HDDA), 1,6-Hexandioldimethacrylat (HDDMA), Butandioldimethacrylat, Zink-diacrylat, Zink-dimethacrylat, Triallylcyanurat (TAC), Triallylisocyanurat (TAIC), Diallylterephthalat, Triallyltrimellitat (TATM) oder N,N'-m-Phenylenbismaleimid (MPBM, HVA-2) enthält.

## Kautschuk-Komponente

Die im Elastomer Teilstück des erfindungsgemäßen Verbundteils einzusetzenden mit elementarem Schwefel zu vulkanisierenden bzw. zu vernetzenden Kautschuke sind Elastomere, die durch einen Vulkanisationsprozess erhältlich sind. Unter Vulkanisation versteht man ein von Charles Goodyear entwickeltes chemisch-technisches Verfahren, bei dem Kautschuk unter Einfluss von Zeit, Temperatur, Druck und mittels geeigneter Vernetzungschemikalien gegen atmosphärische und chemische Einflüsse sowie gegen mechanische Beanspruchung widerstandsfähig gemacht wird.

Gemäß dem Stand der Technik werden zur Schwefel Vulkanisation eine Kautschukmischung, enthaltend Rohkautschuk, Schwefel in Form von löslichem und/oder in Form von unlöslichem Schwefel und/oder Schwefel spendenden Stoffen, hierzu gehören beispielsweise die in der Gummiindustrie als Schwefelspender allgemein bekannten organischen Additive, sowie insbesondere Dischwefeldichlorid ($S_2Cl_2$), Katalysatoren, Hilfsstoffe und gegebenenfalls weitere Füllstoffe erhitzt. Als Additiv kann der Kautschuk Komponente wenigstens ein Vulkanisationsbeschleuniger beigefügt werden, der für die Schwefelvulkanisation geeignet ist.

Im Stand der Technik unterscheidet man fünf Schwefel basierte Vernetzungssysteme, die sich in der Menge des zugesetzten Schwefels bzw. Schwefelspenders und im Verhältnis von Schwefel bzw. Schwefelspender zu Vulkanisationsbeschleuniger unterscheiden.

Das sogenannte "konventionelle" Schwefelvernetzungssystem enthält 2,0 bis 3,5 phr Schwefel (phr = parts per hundred of rubber, d.h. Gew.-Teile bezogen auf 100 Gew.-Teile Kautschuk) und 0,5 bis 1,0 phr Beschleuniger. Beim sogenannten "Semi-EV" Vernetzungssystem (EV = efficient vulcanization) werden 1,0 bis 2,0 phr Schwefel und 1,0 bis 2,5 phr Beschleuniger eingesetzt. Das sogenannte "EV" Vernetzungssystem enthält 0,3 bis 1,0 phr Schwefel und 2,0 bis 6,0 phr Beschleuniger. Setzt man 0,3 bis 0,6 phr Schwefel, 3,0 bis 6,0 phr Beschleuniger und 0,0 bis 2,0 phr Schwefelspender ein, spricht man vom sogenannten "EV-schwefelarmen" Vernetzungssystem. Im fünften, nicht erfindungsgemäß einzusetzenden Schwefel basierten Vernetzungssystem, enthält das sogenannte "Schwefelspender-Vernetzungssystem" keinen elementaren Schwefel (0,0 phr), sondern es werden 0,0 bis 2,0 phr Beschleuniger und 1,0 bis 4,0 phr Schwefelspender eingesetzt. Die Schwefelspender, die im "Schwefelspender-Vernetzungssystem" verwendet werden, wirken als Vulkanisiermittel (F. Röthemeyer, F. Sommer "Kautschuktechnologie", 2. Überarbeitete Auflage, Carl Hanser Verlag München Wien, 2006, Seite 291 bis 295).

In einer Ausführungsform wird als Elastomer Komponente des erfindungsgemäßen Verbundteils ein mit elementarem Schwefel als Vernetzungsmittel zu vulkanisierender bzw. zu vernetzender Kautschuk in Gegenwart zusätzlich wenigstens eines Schwefelvernetzungssystems der Reihe konventionelles Schwefelvernetzungssystem, semi-EV-Vernetzungssystem, EV-Vernetzungssystem oder EV-schwefelarmes Vernetzungssystem eingesetzt.

In allen Fällen kann das Vernetzungssystem neben den sogenannten Hauptbeschleunigern unterschiedliche und gegebenenfalls auch mehrere sogenannte Zweitbeschleuniger enthalten. Deren Art, Dosierung und Kombination wird auf den jeweiligen Anwendungsfall abgestimmt und ist zusätzlich je Kautschuktyp verschieden. Beim Vulkanisationsprozess mit Schwefel werden die langkettigen Kautschukmoleküle durch Schwefelbrücken vernetzt. Hierdurch gehen die plastischen Eigenschaften des Kautschuks bzw. der Kautschukmischung verloren, der Stoff wird mittels des Verfahrens der Vulkanisation vom plastischen in einen elastischen Zustand überführt.

Das bei diesem Verfahren der Vulkanisation entstehende Elastomer, auch als Gummi bezeichnet, hat gegenüber dem Edukt dauerelastische Eigenschaften, kehrt bei mechanischer Beanspruchung jeweils wieder in seine Ursprungslage zurück und hat eine höhere Reißfestigkeit, Dehnung und Beständigkeit gegenüber Alterung und Witterungseinflüssen.

Die Elastizität einer Schwefel vernetzten Elastomer Komponente ist abhängig von der Anzahl der Schwefelbrücken. Je mehr Schwefelbrücken vorhanden sind, desto härter ist der Gummi. Die Anzahl und die Länge der Schwefelbrücken ist wiederum abhängig von der zugesetzten Schwefelmenge, der Art des Vernetzungssystems und der Dauer der Vulkanisation.

Die erfindungsgemäß im Verbundteil einzusetzende, aus mit elementarem Schwefel vernetztem bzw. vulkanisiertem Kautschuk erhältliche Elastomer Komponente, zeichnet sich durch die Gegenwart von C=C-Doppelbindungen aus.

Bei diesen C=C doppelbindungshaltigen Kautschuken handelt es sich bevorzugt um solche auf Basis von Dienen. Erfindungsgemäß besonders bevorzugt sind doppelbindungshaltige Kautschuke, die aus der technischen Herstellung kommend einen Gelanteil von kleiner 30%, bevorzugt kleiner 5%, insbesondere kleiner 3% aufweisen, und nach DIN/ISO 1629 als "R"-bzw. als "M" Kautschuke bezeichnet werden. Gelanteil im Sinne der vorliegenden Erfindung bedeutet den Anteil an nicht mehr löslichem, aber quellbaren dreidimensional vernetztem polymeren Material.

Erfindungsgemäß für das Elastomer Teilstück bevorzugte, mit elementarem Schwefel als Vernetzungsmittel zu vernetzende Kautschuke sind solche der Reihe Naturkautschuk (NR), Ethylen-Propylen-Dien Kautschuke (EPDM), Styrol/Diolefin-Kautschuke, bevorzugt Styrol/Butadienkautschuk (SBR), insbesondere E-SBR, Polybutadienkautschuk (BR), Polyisopren (IR), Butylkautschuk, insbesondere Isobuten/Isopren-Kautschuk (IIR), Halobutylkautschuk, insbesondere Chlor- oder Brombutylkautschuk (XIIR), Nitrilkautschuk (NBR), hydrierter Nitrilkautschuk (H-NBR), carboxylierter Butadien/Acrylnitril-Kautschuk (XNBR) oder Polychloropren (CR). Wenn die Möglichkeit besteht, Kautschuke aus mehreren Synthesewegen zu erhalten, wie beispielsweise aus Emulsion oder aus Lösung, sind immer alle Möglichkeiten gemeint. Die vorgenannten Kautschuke sind dem Fachmann hinreichend bekannt und von unterschiedlichsten Anbietern käuflich erhältlich.

Ferner können auch Mischungen von zwei oder mehr der zuvor genannten Kautschuke eingesetzt werden. Diese Mischungen werden auch als Polymerverschnitte von Kautschuken oder als Kautschukblends bezeichnet (J. Schnetger "Lexikon der Kautschuktechnik" 3. Auflage, Hüthig Verlag Heidelberg, 2004, Seite 375 bis 377). Erfindungsgemäß bevorzugt einzusetzende Kautschukblends sind Mischungen aus NR als Matrixphase und BR als dispergierte Kautschukphase mit BR-Anteilen bis 50 phr und BR als Matrixphase und SBR oder CR als dispergierte Kautschukphase mit SBR- bzw. CR-Anteilen bis 50 phr.

Erfindungsgemäß insbesondere bevorzugt wird für das Elastomer-Teilstück als mit elementarem Schwefel zu vulkanisierender bzw. zu vernetzender Kautschuk wenigstens Naturkautschuk (NR) eingesetzt.

Der erfindungsgemäß insbesondere bevorzugte mit elementarem Schwefel zu vernetzende Naturkautschuk (NR) [CAS Nr. 9006-04-6] für das Elastomer-Teilstück im erfindungsgemäßen Verbundteil ist chemisch ein Polyisopren mit einem cis-1,4-Gehalt von > 99% bei mittleren Molekulargewichten von $2 \cdot 10^6$ bis $3 \cdot 10^7$ g/mol. NR wird auf biochemischem Weg synthetisiert, bevorzugt in der Plantagenpflanze Hevea Brasiliensis. Kommerziell erhältlich sind Naturkautschuke z. B. als Produkte aus der Produktreihe SMR (Standard Malaysian Rubber) von Pacidunia Sdn. Bhd. oder aus der Produktreihe SVR (Standard Vietnamese Rubber) von Phu An Imexco. Ltd. (J. Schnetger "Lexikon der Kautschuktechnik" 3. Auflage, Hüthig Verlag Heidelberg, 2004, Seite 331 bis 338).

Als mit elementarem Schwefel zu vernetzender Kautschuk wird in einer alternativ bevorzugten Ausführungsform für das Elastomer-Teilstück im erfindungsgemäßen Verbundteil EPDM Kautschuk eingesetzt. Bei EPDM [CAS Nr. 25038-36-2] handelt es sich um Polymere, die durch Terpolymerisation von Ethylen und größeren Anteilen Propylen sowie einigen Gew.-% eines dritten Monomeren mit Dien-Struktur hergestellt werden. Das Dien-Monomer stellt dabei die Doppelbindungen für die sich anschließende Vulkanisation bereit. Als Dien-Monomere finden vorwiegend cis,cis-1,5-Cyclooctadien (COD), exo-Dicyclopentadien (DCP), endo-Dicyclopentadien (EDCP), 1,4-Hexadien (HX), 5-Ethyliden-2-norbornen (ENB) und auch Vinylnorbornen (VNB) Verwendung.

EPDM-Kautschuk wird in bekannter Weise durch Polymerisation eines Gemisches aus Ethen und Propen sowie einem Dien in Gegenwart von Ziegler-Natta-Katalysator-Systemen, wie z. B. Vanadiumverbindungen mit Organoaluminium-Cokatalysatoren, oder Metallocen-Katalysator-Systemen hergestellt (J. Schnetger "Lexikon der Kautschuktechnik" 3. Auflage, Hüthig Verlag Heidelberg, 2004, Seite 144 bis 146). In der Regel wird ein Gemisch aus mehr als 25 Gew.-% Ethen, mehr als 25 Gew.-% Propen und 1 bis 10 Gew.-%, vorzugsweise 1 bis 3 Gew.-% eines nicht konjugierten Diens wie Bicyclo-(2.2.1)-heptadien, 1,5-Hexadien, 1,4-Dicyclopentadien, 5-Ethylidennorbornen und auch Vinylnorbornen (VNB) polymerisiert.

EPDM Kautschuke sind beispielsweise als Produkte aus der Produktreihe der Marke Keltan® von der Lanxess Deutschland GmbH erhältlich, oder aber auch nach den für den Fachmann geläufigen Methoden herstellbar.

Als mit elementarem Schwefel zu vernetzender Kautschuk wird in einer alternativen bevorzugten Ausführungsform SBR-Kautschuk, auch als Vinylaromat/Dien-Kautschuk bezeichnet, für das Elastomer-Teilstück im erfindungsgemäßen Verbundteil eingesetzt. Unter SBR- bzw. Vinylaromat/Dien-Kautschuken [CAS Nr. 9003-55-8] werden Kautschuke auf Basis von Vinylaromaten und Dienen verstanden und zwar sowohl Lösungs- Vinylaromat/Dien-Kautschuke wie Lösungs-SBR, abgekürzt als "L-SBR", als auch Emulsions-Vinylaromat/Dien-Kautschuke, wie Emulsions-SBR, abgekürzt als E-SBR.

Unter L-SBR versteht man Kautschuke, die in einem Lösungsprozess auf der Basis von Styrol als Vinylaromaten und Butadien als Dien hergestellt werden (H. L. Hsieh, R. P. Quirk, Marcel Dekker Inc. New York-Basel 1996; I. Franta Elastomers and Rubber Compounding Materials; Elsevier 1989, Seite 73-74, 92-94; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 240-364). Bevorzugte vinylaromatische Monomere sind Styrol, o-, m- und p- Methylstyrol, technische Methylstyrolgemische, p-tert.-Butylstyrol, $\alpha$-Methylstyrol, p-Methoxystyrol, Vinylnaphthalin, Divinylbenzol, Trivinylbenzol und Divinylnaphthalin. Besonders bevorzugt ist Styrol. Der Gehalt an einpolymerisiertem Vinylaromat liegt bevorzugt im Bereich von 5 bis 50 Gew.-%, besonders bevorzugt im Bereich von 10 bis 40 Gew.-%. Bevorzugte Diolefine sind 1,3-Butadien, Isopren, 1,3-Pentadien, 2,3-Dimethylbutadien, 1-Phenyl-1,3-butadien und 1,3-Hexadien. Besonders bevorzugt sind 1,3-Butadien und Isopren. Der Gehalt an einpolymerisierten Dienen liegt im Bereich von 50 bis 95 Gew.-%, bevorzugt im Bereich von 60 bis 90 Gew.-%. Der Gehalt an Vinylgruppen im einpolymerisierten Dien liegt im Bereich von 10 bis 90 Gew.-%, der Gehalt an 1,4-trans-ständigen Doppelbindungen liegt im Bereich von 20 bis Gew.-80% und der Gehalt an 1,4-cis-ständigen Doppelbindungen ist komplementär zur Summe aus Vinylgruppen und 1,4-trans-ständigen Doppelbindungen. Der Vinylgehalt des L-SBR beträgt vorzugsweise > 20 Gew.-%.

Üblicherweise sind die polymerisierten Monomeren und die unterschiedlichen Dien-Konfigurationen statistisch im Polymer verteilt. Auch Kautschuke mit blockartig aufgebauter Struktur, die als Integralkautschuk bezeichnet werden, sollen unter die Definition von L-SBR (A) fallen (K.-H. Nordsiek, K.-H. Kiepert, GAK Kautschuk Gummi Kunststoffe 33 (1980), no. 4, 251-255).

Unter L-SBR sollen sowohl lineare als auch verzweigte oder endgruppenmodifizierte Kautschuke verstanden werden. Beispielsweise sind derartige Typen in DE 2 034 989 A1 genannt. Als Verzweigungsmittel wird bevorzugt Siliciumtetrachlorid bzw. Zinntetrachlorid eingesetzt.

Die Herstellung dieser Vinylaromat/Dien-Kautschuke erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Dien-Kautschuke besitzen vorteilhafterweise Mooney-Viskositäten (ML 1+4 at 100°C) im Bereich von 20 bis 150 Mooneyeinheiten, vorzugsweise im Bereich von 30 bis 100 Mooneyeinheiten. Ölfreie L-SBR-Kautschuke weisen Glastemperaturen im Bereich von -80°C bis +20°C auf, bestimmt durch Differentialthermoanalyse (DSC). Ölfrei im Sinne der vorliegenden Erfindung bedeutet, dass im Herstellprozess kein Öl in den Kautschuk eingemischt wurde.

Unter E-Vinylaromat/Dien-Kautschuk versteht man Kautschuke, die in einem Emulsionsprozess auf der Basis von Vinylaromaten und Dienen, bevorzugt konjugierten Dienen, und gegebenenfalls weiteren Monomeren hergestellt werden (Ullmann's Encyclopedia of Industrial Chemistry, Vol A 23, Rubber 3. Synthetic, VCH Verlagsgesellschaft mbH, D-69451 Weinheim, 1993, S. 247-251). Bevorzugte Vinylaromaten sind Styrol, p-Methylstyrol und alpha-Methylstyrol. Bevorzugte Diene sind insbesondere Butadien und Isopren. Weitere Monomere sind insbesondere Acrylnitril. Der Gehalt an einpolymerisiertem Vinylaromat liegt im Bereich von 10 bis 60 Gew.-%. Die Glastemperatur liegt üblicherweise im Bereich von -50°C bis +20°C (bestimmt mittels DSC) und die Mooney-Viskositäten (ML 1+4 at 100°C) liegen im Bereich von 20 bis 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien E-SBR-Kautschuke weisen Glastemperaturen von -70°C bis +20°C auf, bestimmt durch Differentialthermoanalyse (DSC).

Sowohl E-SBR als auch S-SBR können in den Elastomer-Komponenten für das Elastomer-Teilstück im erfindungsgemäßen Verbund auch in ölverstreckter Form eingesetzt werden. Ölverstreckt im Sinne der vorliegenden Erfindung bedeutet, dass Öle im Herstellprozess in den Kautschuk eingemischt werden. Die Öle dienen als Weichmacher. Anwendung finden dabei dem Fachmann bekannte und industrieübliche Öle. Bevorzugt sind solche, die wenig bis keine polyaromatischen Kohlenwasserstoffe enthalten. Geeignet sind TDAE (Treated Distillate Aromatic Extract), MES (Mild Extraction Solvate) und naphthenische Öle.

Als mit elementarem Schwefel zu vernetzender Kautschuk wird in einer alternativen bevorzugten Ausführungsform für das Kautschuk-Teilstück im erfindungsgemäßen Verbund Polybutadien (BR) [CAS Nr. 9003-17-2] eingesetzt. Polybutadien (BR) umfasst insbesondere zwei unterschiedliche Polybutadien-Typklassen. Die erste Klasse weist einen 1,4-cis-Gehalt (1,4 Polybutadien [CAS Nr. 25038-44-2]) von mindestens 90% auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt (Houben-Weyl, Methoden der Organischen Chemie, Thieme Verlag, Stuttgart, 1987, Band E 20, Seiten 798 bis 812; Ullmann's Encyclopedia of Industrial Chemistry, Vol A 23, Rubber 3. Synthetic, VCH Verlagsgesellschaft mbH, D-69451 Weinheim, 1993, S. 239-364). Die Glastemperatur dieser Polybutadiene liegt bevorzugt bei ≤ -90°C (bestimmt mittels DSC).

Die zweite Polybutadien-Typklasse wird mit Li-Katalysatoren hergestellt und weist Vinylgehalte im Bereich von 10% bis 80% auf. Die Glastemperaturen dieser Polybutadien-Kautschuke liegen im Bereich von -90°C bis +20°C (bestimmt mittels DSC).

Als mit elementarem Schwefel zu vernetzender Kautschuk wird in einer alternativen bevorzugten Ausführungsform für das Kautschuk-Teilstück im erfindungsgemäßen Verbund Polyisopren (IR) eingesetzt. Polyisopren (IR) hat typischerweise einen 1,4-cis-Gehalt von mindestens 70%. Unter den Begriff IR fallen sowohl synthetisch hergestelltes 1,4-cis-Polyisopren [CAS Nr. 104389-31-3], als auch Naturkautschuk (NR). Synthetisch wird IR sowohl mittels Lithium- als auch mit Hilfe von Ziegler/Natta-Katalysatoren hergestellt, vorzugsweise mit Titan- und Neodymkatalysatoren (Houben-Weyl, Methoden der Organischen Chemie, Thieme Verlag, Stuttgart, 1987, Band E 20, Seiten 822 bis 840; Ullmann's Encyclopedia of Industrial Chemistry, Vol. A 23, Rubber 3. Synthetic, VCH Verlagsgesellschaft mbH, D-69451 Weinheim, 1993, S. 239-364). Vorzugsweise wird Naturkautschuk eingesetzt.

Auch 3,4-Polyisopren, das Glastemperaturen im Bereich von -20 bis +30°C aufweist, fällt unter IR.

Als mit elementarem Schwefel zu vernetzender Kautschuk wird in einer alternativen bevorzugten Ausführungsform für das Elastomer-Teilstück im erfindungsgemäßen Verbund Nitrilkautschuk (NBR) eingesetzt. NBR [CAS Nr. 9003-18-3] oder [CAS Nr. 9005-98-5] wird durch Copolymerisation von Acrylnitril und Butadien in Masseverhältnissen im Bereich von ca. 51 : 48 bis 82 : 18 gewonnen. Seine Herstellung erfolgt praktisch ausschließlich in wässriger Emulsion. Die dabei resultierenden Emulsionen werden für den Einsatz im Rahmen dieser Erfindung zum Festkautschuk aufgearbeitet (J. Schnetger "Lexikon der Kautschuktechnik" 3. Auflage, Hüthig Verlag Heidelberg, 2004, Seite 28-29).

Als mit elementarem Schwefel zu vernetzender Kautschuk wird in einer alternativen bevorzugten Ausführungsform für das Kautschuk-Teilstück im erfindungsgemäßen Verbund hydrierter Nitrilkautschuk (H-NBR) eingesetzt. H-NBR wird über vollständige oder partielle Hydrierung von NBR in nicht-wässriger Lösung unter Einsatz spezieller Katalysatoren (z. B. Pyridin-Cobalt-Komplexe oder Rhodium-, Ruthenium-, Iridium- oder Palladium-Komplexe) hergestellt (J. Schnetger "Lexikon der Kautschuktechnik" 3. Auflage, Hüthig Verlag Heidelberg, 2004, Seite 30).

Als mit elementarem Schwefel zu vernetzender Kautschuk wird in einer alternativen bevorzugten Ausführungsform für das Elastomer-Teilstück im erfindungsgemäßen Verbund carboxylierter Butadien/Acrylnitril-Kautschuk (XNBR) eingesetzt. XNBR wird über Terpolymerisation von Butadien, Acrylnitril und Acrylsäure bzw. Methacrylsäure hergestellt. Der Anteil der Carbonsäure liegt zwischen 1 und 7 Gew.-% (F. Röthemeyer, F. Sommer "Kautschuktechnologie", 2. überarbeitete Auflage, Carl Hanser Verlag München Wien, 2006, Seite 112).

Als mit elementarem Schwefel zu vernetzender Kautschuk wird in einer alternativen bevorzugten Ausführungsform für das Kautschuk-Teilstück im erfindungsgemäßen Verbund Butylkautschuk (IIR), insbesondere Isobuten/Isopren-Kautschuk, eingesetzt. Butylkautschuk wird über eine Copolymerisation aus Isorpren und Isobutylen hergestellt (J. Schnetger "Lexikon der Kautschuktechnik" 3. Auflage, Hüthig Verlag Heidelberg, 2004, Seite 69 bis 71).

Als mit elementarem Schwefel zu vernetzender Kautschuk wird in einer alternativen bevorzugten Ausführungsform für das Kautschuk-Teilstück im erfindungsgemäßen Verbund Halobutylkautschuk (XIIR), insbesondere Chlor- (CIIR) oder Brombutylkautschuk (BIIR), eingesetzt. Chlorbutylkautschuk (CIIR) [CAS Nr. 68081-82-3] wird durch Einleiten von Chlorgas in eine Butylkautschuklösung hergestellt (J. Schnetger "Lexikon der Kautschuktechnik" 3. Auflage, Hüthig Verlag Heidelberg, 2004, Seite 75). Brombutylkautschuk (BIIR) [CAS Nr. 308063-43-6] wird durch Behandlung von Butylkautschuk in Lösung mit Brom hergestellt (J. Schnetger "Lexikon der Kautschuktechnik" 3. Auflage, Hüthig Verlag Heidelberg, 2004, Seite 66 bis 67).

Als mit elementarem Schwefel zu vernetzender Kautschuk wird in einer alternativen bevorzugten Ausführungsform für das Elastomer-Teilstück im erfindungsgemäßen Verbund Polychloropren (CR) eingesetzt. Polychloropren [CAS Nr. 9010-98-4] wird aus Chloropren (2-Chlor-1,3-butadien), gegebenenfalls in Anwesenheit von Dichlorbutadien oder Schwefel als Comonomere, in einer Emulsionspolymerisation hergestellt. Durch Verwendung spezieller Regler wie Mercaptane, z. B. n-Dodecylmercaptan, oder Xanthogendisulfid während der Polymerisation können sogenannte Mercaptan-CR-Typen bzw. Xanthogendisulfid-CR-Typen hergestellt werden, die mit Metalloxiden, Vulkanisationsbeschleunigern und Schwefel vernetzt werden können. Hierbei können spezielle Beschleunigersysteme, insbesondere Thioharnstoffe (ETU, DBTU, TBTU, DETU, MTT) eingesetzt werden (J. Schnetger "Lexikon der Kautschuktechnik" 3. Auflage, Hüthig Verlag Heidelberg, 2004, Seite 78 bis 81; F. Röthemeyer, F. Sommer "Kautschuktechnologie", 2. überarbeitete Auflage, Carl Hanser Verlag München Wien, 2006, Seite 15 bis 163).

Bevorzugt wird als mit elementarem Schwefel zu vernetzender Kautschuk für das Kautschuk-Teilstück im erfindungsgemäßen Verbund wenigstens einer aus der Gruppe Naturkautschuk (NR), Ethylen-Propylen-Dien Kautschuke (EPDM) [CAS Nr. 25038-36-2], Styrol/Diolefin-Kautschuke, bevorzugt Styrol/Butadien-Kautschuk (SBR) [CAS Nr. 9003-55-8], insbesondere E-SBR [CAS Nr. 56-81-5], Polybutadienkautschuk (BR) [CAS Nr. 9003-17-2], Polyisopren (IR), Butylkautschuk, insbesondere Isobuten/Isopren-Kautschuk (IIR), Halobutylkautschuk, insbesondere Chlor- oder Brombutylkautschuk (XIIR), Nitrilkautschuk (NBR), hydrierter Nitrilkautschuk (H-NBR), carboxylierter Butadien/Acrylnitril-Kautschuk (XNBR) oder Polychloropren (CR) [CAS Nr. 9010-98-4] oder Mischungen von zwei oder mehr der zuvor genannten Kautschuke eingesetzt. Die in Klammern gesetzten Kurzzeichen sind DIN ISO 1629 entnommen.

Besonders bevorzugt wird als mit elementarem Schwefel zu vernetzender Kautschuk für das Kautschuk-Teilstück im erfindungsgemäßen Verbund wenigstens ein Kautschuk aus der Gruppe Naturkautschuk (NR), Ethylen-Propylen-Dien Kautschuk (EPDM), Styrol/Butadien-Kautschuk (SBR), carboxylierter Butadien/Acrylnitril-Kautschuk (XNBR), Polychloropren (CR), Nitrilkautschuk (NBR) oder Polybutadien (BR) oder Mischungen von zwei oder mehr der zuvor genannten Kautschuke eingesetzt.

Ganz besonders bevorzugt wird als mit elementarem Schwefel zu vernetzender Kautschuk für das Kautschuk-Teilstück im erfindungsgemäßen Verbund wenigstens ein Kautschuk aus der Gruppe Naturkautschuk (NR), Ethylen-Propylen-Dien Kautschuk (EPDM), StyrolButadien-Kautschuk (SBR), carboxylierter Butadien/Acrylnitril-Kautschuk (XNBR) oder Polybutadien (BR) oder Mischungen von zwei oder mehr der zuvor genannten Kautschuke eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Naturkautschuk (NR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Ethylen-Propylen-Dien Kautschuk (EPDM) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Styrol/Butadien-Kautschuk (SBR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Polybutadien (BR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Polyisopren (IR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Butylkautschuk (IIR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Halobutylkautschuk (XIIR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Nitrilkautschuk (NBR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk hydrierter Nitrilkautschuk (H-NBR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk carboxylierter Butadien/Acrylnitril-Kautschuk (XNBR) eingesetzt.

In einer ganz besonders bevorzugten Ausführungsform der vorliegenden Erfindung wird für das Kautschuk-Teilstück im erfindungsgemäßen Verbund als mit elementarem Schwefel zu vernetzender Kautschuk Polychloropren (CR) eingesetzt.

Die für das Elastomer Teilstück einzusetzenden Kautschuke können in unfunktionalisierter Form vorliegen. In einzelnen Fällen kann die Verbundhaftung weiter verbessert werden, wenn der Kautschuk funktionalisiert wird, insbesondere durch Einbringen von Hydroxylgruppen, Carboxylgruppen oder Säureanhydridgruppen.

**Schwefel**

Erfindungsgemäß wird dem zu vernetzenden Kautschuk für das Elastomer-Teilstück im erfindungsgemäßen Verbund als Vernetzer/Vulkanisator elementarer Schwefel [CAS Nr. 7704-34-9] beigefügt. Dieser wird entweder als löslicher oder unlöslicher Schwefel, bevorzugt als löslicher Schwefel, eingesetzt.

Unter löslichem Schwefel versteht man die bei gewöhnlichen Temperaturen einzige stabile Form, den gelben Cyclooctaschwefel, auch als $S_8$-Schwefel oder $\alpha$-Schwefel bezeichnet, die aus typischen rhombischen Kristallen besteht und in Schwefelkohlenstoff hoch löslich ist. So lösen sich bei 25°C in 100 g $CS_2$ 30 g $\alpha$-S (Stichwort "Schwefel" des Online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 - 95% in Schwefelkohlenstoff unlöslich.

**Schwefelspender**

In einer alternativen bevorzugten Ausführungsform wird zusätzlich zum elementaren Schwefel dem Kautschuk des Elastomer-Teilstücks des erfindungsgemäßen Verbunds wenigstens ein sogenannter Schwefelspender zugesetzt. Diese zusätzlich einzusetzenden Schwefelspender können über eine Beschleunigerwirkung in Bezug auf die Vulkanisation verfügen, oder nicht. Bevorzugt einzusetzende Schwefelspender ohne Beschleunigerwirkung sind Dithiomorpholin (DTDM) [CAS Nr. 103-34-4] oder Caprolactamdisulfid (CLD) [CAS Nr. 23847-08-7]. Bevorzugt einzusetzende Schwefelspender mit Beschleunigerwirkung sind 2-(4-Morpholinodithio)benzothiazol (MBSS) [CAS Nr. 102-77-2], Tetramethylthiuramdisulfid (TMTD) [CAS Nr. 137-26-8], Tetraethylthiuramdisulfid (TETD) [CAS Nr. 97-77-8] oder Dipentamethylenthiuramtetrasulfid (DPTT) [CAS Nr. 120-54-7] (J. Schnetger "Lexikon der Kautschuktechnik" 3. Auflage, Hüthig Verlag Heidelberg, 2004, Seite 472 oder F. Röthemeyer, F. Sommer "Kautschuktechnologie", 2. überarbeitete Auflage, Carl Hanser Verlag München Wien, 2006, Seite 309 bis 310).

Elementarer Schwefel und in bevorzugten Ausführungsformen gegebenenfalls zusätzlich einzusetzender Schwefelspender werden in der für das Elastomer-Teilstück im erfindungsgemäßen Verbund erfindungsgemäß einzusetzenden Kautschukmischung bevorzugt in einer Gesamtmenge im Bereich von 0,1 bis 15 Gew.-Teilen, besonders bevorzugt 0,1-10 Gew.-Teilen, bezogen auf 100 Gew.-Teile des Kautschuks der Elastomer Komponente eingesetzt.

Werden zwei oder mehrere Kautschuke als Elastomer Komponente im Elastomer-Teilstück des erfindungsgemäßen Verbunds eingesetzt, so dient die Summe aller Kautschuke als Basis für die vorgenannten Angaben in Gew.-Teilen. Dies gilt im Folgenden auch für alle anderen Mengenangaben für die übrigen Komponenten einer erfindungsgemäß einzusetzenden Elastomer Komponente zur Herstellung eines erfindungsgemäßen Verbunds.

**Vulkanisationsbeschleuniger**

In einer erfindungsgemäß bevorzugten Ausführungsform kann dem Kautschuk im Elastomer-Teilstück des erfindungsgemäßen Verbunds als Additiv wenigstens ein Vulkanisationsbeschleuniger beigefügt werden, der für die Schwefelvulkanisation mit elementarem Schwefel geeignet ist. Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Erfindungsgemäß bevorzugte Vulkanisationsbeschleuniger sind Xanthogenate, Dithiocarbamate, Tetramethylthiuramdisulfide, Thiurame, Thiazole, Thioharnstoff-Derivate, Amin-Derivate wie Tetramine, Sulfenimide, Piperazine, Amincarbamate, Sulfenamide, Dithiophosphorsäure-Derivate, Bisphenol- oder Triazin-Derivate.

Erfindungsgemäß besonders bevorzugte Vulkanisationsbeschleuniger sind Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalze (ZMBT), Kupfer-dimethyldithiocarbamat (CDMC), Benzothiazyl-2-sulfenmorpholid (MBS), Benzothiazyldicyclohexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyl-dithiocarbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylen-thioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methylpiperazin); Hexamethylendiamincarbamat (HMDAC); Benzothiazyl-2tert.-butylsulfenamid (TOBS), N,N'-Diethylthiocarbamyl-N'-cyclohexylsulfenamid (DETCS), N-Oxidiethylen-dithiocarbamyl-N'-oxydiethylensulfenamid (OTOS), 4,4'-Dihydroxydiphenylsulfon (Bisphenol S), Zn-isopropylxanthogenat (ZIX), Selen-, Tellur-, Blei, Kupfer- und Erdalkalisalze von Dithiocarbaminsäuren; Pentamethylenammonium-N-pentamethylendithiocarbamat; Dithiophosphorsäurederivate; Cyclohexylethylamin; Dibutylamin; Polyethylenpolyamine oder Polyethylenpolyimine wie z. B. Triethylentetramin (TETA).

Die Vulkanisationsbeschleuniger werden bevorzugt in einer Menge im Bereich von 0,1 bis 15 Gew.-Teilen, bevorzugt 0,1-10 Gew.-Teilen, bezogen auf 100 Gew.-Teile des Kautschuks der Elastomer Komponente, eingesetzt.

**Aktivator**

In einer erfindungsgemäß bevorzugten Ausführungsform wird dem Kautschuk für das Elastomer Teilstück des erfindungsgemäßen Verbunds als Additiv Zinkoxid [CAS Nr. 1314-13-2] und Stearinsäure [CAS Nr. 57-11-4] oder Zinkoxid und 2-Ethylhexansäure [CAS Nr. 149-57-5] oder Zinkstearat [CAS Nr. 557-05-1] beigefügt. Der Einsatz des Zinkoxids erfolgt als Aktivator für die Schwefelvulkanisation. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen und damit zu einer verbesserten Alterungsbeständigkeit der Kautschuk Komponente. Im Falle des Einsatzes von Zinkoxid enthält die erfindungsgemäße Kautschuk Komponente ferner Stearinsäure (Octadecansäure). Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion der Vulkanisationsbeschleuniger in der Elastomer Komponente führt. Ferner kommt es zu einer Komplexbildung mit Zinkionen im Rahmen der Schwefelvulkanisation. Als Alternative zur Stearinsäure kann auch 2-Ethylhexansäure eingesetzt werden.

Bevorzugt wird Zinkoxid in einer Menge von 0,5 bis 15 Gew.-Teilen, bevorzugt 1 bis 7,5 Gew.-Teilen, besonders bevorzugt 1 bis 5 Gew.-Teilen bezogen auf 100 Gew.-Teile des Kautschuks im Elastomer Teilstück eingesetzt.

Bevorzugt wird Stearinsäure bzw. 2-Ethylhexansäure in einer Menge von 0,1 bis 7 Gew.-Teilen, bevorzugt 0,25 bis 7 Gew.-Teilen, bevorzugt 0,5 bis 5 Gew.-Teilen, bezogen auf 100 Gew.-Teile des Kautschuks des Elastomer Teilstücks eingesetzt.

Alternativ oder aber auch zusätzlich zur Kombination aus Zinkoxid und Stearinsäure kann in einer bevorzugten Ausführungsform Zinkstearat eingesetzt werden. In diesem Fall wird üblicherweise eine Menge von 0,25 bis 5 Gew.-Teilen, bevorzugt 1 bis 3 Gew.-Teilen, jeweils bezogen auf 100 Gew.-Teile des Kautschuks des Elastomer Teilstücks im erfindungsgemäßen Verbundteil eingesetzt. Als Alternative zum Zinkstearat kann auch das Zinksalz der 2-Ethylhexansäure eingesetzt werden.

In einer alternativen bevorzugten Ausführungsform kann neben elementarem Schwefel die Vernetzung im Elastomer Teilstück des erfindungsgemäßen Verbundteils auch als gemischte Schwefel-Peroxid-Vernetzung durchgeführt werden.

**Weitere Komponenten**

Darüber hinaus enthält die Elastomer Komponente für das Elastomer-Teilstück im erfindungsgemäßen Verbund in einer bevorzugten Ausführungsform wenigstens eine weitere Komponente der Reihe Füllstoffe, Mastiziermittel, Weichmacher, Verarbeitungswirkstoffe, Alterungs-, UV- oder Ozonschutzmittel, Klebrigmacher, Pigmente oder Farbstoffe, Treibmittel, Flammschutzmittel, Formtrennmittel, Festigkeitsträger oder Haftungssysteme.

Im Falle des Einsatzes von Füllstoffen in der Elastomer Komponente für das Elastomer Teilstück im erfindungsgemäßen Verbund wird bevorzugt wenigstens ein Füllstoff der Reihe Kieselsäure, Ruß, Silikate, Oxide oder organische Füllstoffe eingesetzt.

Kieselsäure oder "Silica" (Ullmann's Encyclopedia of Industrial Chemistry, VCH Verlagsgesellschaft mbH, D-69451 Weinheim, 1993, "Silica", S.635-645), wird insbesondere als pyrogene Kieselsäure (ibid. S. 635-642) oder als gefällte Kieselsäure (ibid. 642-645) eingesetzt, wobei erfindungsgemäß die gefällte Kieselsäure [CAS-Nr. 112926-00-8 oder CAS Nr. 7631-86-9] bevorzugt wird. Die gefällten Kieselsäuren haben eine spezifische Oberfläche von 5 bis 1000 $m^2/g$ bestimmt nach BET, vorzugsweise eine spezifische Oberfläche von 20 bis 400 $m^2/g$. Sie werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Erfindungsgemäß bevorzugt werden Kieselsäuren mit spezifischen Oberflächen im Bereich von 5 bis 1000 $m^2/g$, bevorzugter im Bereich von 20 bis 400 $m^2/g$, jeweils bestimmt nach BET, eingesetzt.

Die in einer Ausführungsform als Füllstoffe in der Elastomer Komponente für das Elastomer Teilstück im erfindungsgemäßen Verbund einzusetzende Ruße [CAS Nr. 1333-86-4] sind dem Fachmann ebenfalls bekannt (siehe Stichworte "carbon" bzw. "carbon black" in Ullmann's Encyclopedia of Industrial Chemistry, VCH Verlagsgesellschaft mbH, D-69451 Weinheim, 1993, vol A 5 S.95-158). Sie werden bevorzugt nach dem gas black-, furnace black-, lamp black- oder thermal black-Verfahren hergestellt und werden nach der neuen ASTM-Nomenklatur (ASTM D 1765 und D 2516) als N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N642, N 650, N 660, N 683, N 754, N 762, N 765, N 772, N 774, N 787, N 907, N 908 N 990, N 991 S 3 etc. bezeichnet. Gegebenenfalls als Füllstoff einzusetzende Ruße besitzen bevorzugt BET-Oberflächen im Bereich von 5 bis 200 $m^2$/g.

Bevorzugte weitere Füllstoffe, die in der Elastomer Komponente für das Elastomer-Teilstück im erfindungsgemäßen Verbund eingesetzt werden können, sind solche aus der Gruppe der synthetischen Silikate, insbesondere Aluminiumsilikat, der Erdalkalisilikate, insbesondere Magnesiumsilikat oder Calciumsilikat mit BET-Oberflächen im Bereich von 20 bis 400 $m^2$/g und Primärteilchendurchmessern im Bereich von 5 bis 400 nm, natürliche Silikate, wie Kaolin, Kieselgur und andere natürlich vorkommende Kieselsäuren, der Metalloxide, insbesondere Aluminiumoxid, Magnesiumoxid, Calciumoxid, der Metallcarbonate, insbesondere Calciumcarbonat, Magnesiumcarbonat, Zinkcarbonat, der Metallsulfate, insbesondere Calciumsulfat, Bariumsulfat, der Metallhydroxide, insbesondere Aluminiumhydroxid oder Magnesiumhydroxid, der Glasfasern oder Glasfaserprodukte (Latten, Stränge oder Mikroglaskugeln), der Thermoplaste, insbesondere Polyamid, Polyester, Aramid, Polycarbonat, syndiotaktisches 1,2 Polybutadien oder trans-1,4-Polybutadien, sowie Cellulose, Cellulosederivate oder Stärke.

Im Falle des Einsatzes von zusätzlichen Mastiziermitteln in der Elastomer Komponente für das Elastomer-Teilstück im erfindungsgemäßen Verbund wird bevorzugt wenigstens ein Mastiziermittel der Reihe Thiophenole, Thiophenolzinksalze, substituierte aromatische Disulfide, Peroxide, Thiocarbonsäure-Derivate, Nitrosoverbindungen, Hydrazinderivate, Porofore (Treibmittel) oder Metallkomplexe, insbesondere Eisenhemiporphyrazin, Eisenphthalocyanin, Eisenacetonylacetat oder dessen Zinksalz eingesetzt (J. Schnetger "Lexikon der Kautschuktechnik" 3. Auflage, Hüthig Verlag Heidelberg, 2004, Seite 1 bis 2). Die Funktionsweise der Mastiziermittel wird in EP 0 603 611 A1 beschrieben.

Im Falle des Einsatzes von zusätzlichen Weichmachern in der Elastomer Komponente für das Elastomer-Teilstück im erfindungsgemäßen Verbund wird bevorzugt wenigstens ein Weichmacher der Reihe paraffinische Mineralöle, naphthenische Mineralöle, aromatische Mineralöle, aliphatische Ester, aromatische Ester, Polyester, Phosphate, Ether, Thioether, natürliche Fette oder natürliche Öle eingesetzt (F.Röthemeyer, F.Sommer "Kautschuktechnologie", 2. überarbeitete Auflage, Carl Hanser Verlag München Wien, 2006, Seite 329 bis 337).

Im Falle des Einsatzes von zusätzlichen Verarbeitungswirkstoffen in der Elastomer Komponente für das Elastomer-Teilstück im erfindungsgemäßen Verbund wird bevorzugt wenigstens ein Verarbeitungswirkstoff der Reihe Fettsäuren, Fettsäure-Derivate, Fettsäureester, Fettalkohole oder Faktis eingesetzt (F. Röthemeyer, F. Sommer "Kautschuktechnologie", 2. überarbeitete Auflage, Carl Hanser Verlag München Wien, 2006, Seite 337 bis 338). Faktis, auch bekannt als Ölkautschuk, ist ein gummiartiger Werkstoff, der durch Vernetzung ungesättigter Mineral- und Pflanzenöle, in Europa vor allem von Raps-(Rüb-) und Rizinusöl sowie in Amerika zusätzlich von Sojaöl, entsteht. Siehe hierzu auch http://de.wikipedia.org/wiki/Faktis.

Im Falle des Einsatzes von zusätzlichen Alterungs-, UV- und Ozonschutzmitteln in der Elastomer Komponente wird bevorzugt wenigstens ein Alterungs-, UV- und Ozonschutzmittel der Reihe UV-Stabilisatoren, insbesondere Ruß - sofern nicht bereits als Füllstoff eingesetzt - oder Titandioxid, Ozonschutzwachse, Hydroperoxide zersetzende Additive (Tris-nonylphenyl-phosphit), Schwermetall-Stabilisatoren, substituierte Phenole, Diarylamine, substituierte p-Phenylendiamine, heterozyklische Mercaptoverbindungen, Paraffinwachse, mikrokristalline Wachse oder Paraphenylendiamine eingesetzt (F. Röthemeyer, F. Sommer "Kautschuktechnologie", 2. überarbeitete Auflage, Carl Hanser Verlag München Wien, 2006, Seite 338 bis 344).

Im Falle des Einsatzes von zusätzlichen Klebrigmacher-Harzen in der Elastomer Komponente des Elastomer-Teilstücks im erfindungsgemäßen Verbund wird bevorzugt wenigstens ein Klebrigmacher-Harz der Reihe Naturharz, Kohlenwasserstoffharz oder Phenolharz eingesetzt (F. Röthemeyer, F. Sommer "Kautschuktechnologie", 2. überarbeitete Auflage, Carl Hanser Verlag München Wien, 2006, Seite 345 bis 346).

Im Falle des Einsatzes von zusätzlichen Pigmenten und Farbstoffen in der Elastomer Komponente des Elastomer-Teilstücks im erfindungsgemäßen Verbund wird bevorzugt wenigstens ein Pigment oder Farbstoff der Reihe Titandioxid - sofern nicht bereits als UV-Schutzmittel eingesetzt -, Lithopone, Zinkoxid, Eisenoxid, Ultramarinblau, Chromoxid, Antimonsulfid oder organische Farbstoffe eingesetzt (F. Röthemeyer, F. Sommer "Kautschuktechnologie", 2. Überarbeitete Auflage, Carl Hanser Verlag München Wien, 2006, Seite 345).

Im Falle des Einsatzes von zusätzlichen Treibmitteln in der Elastomer Komponente des Elastomer-Teilstücks im erfindungsgemäßen Verbund wird bevorzugt wenigstens ein Treibmittel der Reihe Benzolsulfohydrazid, Dinitrosopentamethylentretramin oder Azodicarbonamid eingesetzt (F. Röthemeyer, F. Sommer "Kautschuktechnologie", 2. überarbeitete Auflage, Carl Hanser Verlag München Wien, 2006, Seite 346).

Im Falle des Einsatzes von zusätzlichen Flammschutzmitteln in der Elastomer Komponente des Elastomer-Teilstücks im erfindungsgemäßen Verbund wird bevorzugt wenigstens ein Flammschutzmittel der Reihe Aluminiumoxidhydrat, halogenierte Flammschutzmittel oder phosphorhaltige Flammschutzmittel eingesetzt (F. Röthemeyer, F. Sommer "Kautschuktechnologie", 2. überarbeitete Auflage, Carl Hanser Verlag München Wien, 2006, Seite 346).

Im Falle des Einsatzes von Formtrennmitteln in der Elastomer Komponente des Elastomer-Teilstücks im erfindungsgemäßen Verbund wird bevorzugt wenigstens ein Formtrennmittel der Reihe gesättigte und teilweise ungesättigte Fett- und Ölsäuren oder deren Derivate, insbesondere Fettsäureester, Fettsäuresalze, Fettalkohole, Fettsäureamide, eingesetzt. Im Fall der Applikation der Formtrennmittel auf die Formoberfläche können bevorzugt Produkte auf Basis von niedermolekularen Silikonverbindungen, Produkte auf Basis von Fluorpolymeren sowie Produkte auf Basis von Phenolharzen eingesetzt werden.

Im Falle des Einsatzes von Festigkeitsträgern (Fasern) in der Elastomer Komponente des Elastomer-Teilstücks im erfindungsgemäßen Verbund zur Verstärkung der Vulkanisate wird bevorzugt wenigstens ein Festigkeitsträger in Form von Fasern auf Basis von Glas, gemäß US-A-4,826,721 oder Corde, Gewebe, Fasern aus aliphatischen oder aromatischen Polyamiden (Nylon®, Aramid®), aus Polyestern oder aus Naturfaserprodukten eingesetzt. Es können sowohl Stapelfasern als auch Endlosfasern eingesetzt werden (J. Schnetger "Lexikon der Kautschuktechnik" 3. Auflage, Hüthig Verlag Heidelberg, 2004, Seiten 498 und 528). Eine beispielhafte Aufstellung von in der Kautschukindustrie üblichen Festigkeitsträgern findet man z. B. in F. Röthemeyer, F. Sommer "Kautschuktechnologie", 2. überarbeitete Auflage, Carl Hanser Verlag München Wien, 2006, Seite 823 bis 827.

Erfindungsgemäß eingeschlossene Erscheinungsformen der Elastomer Komponente des Elastomer-Teilstücks im erfindungsgemäßen Verbund sind geschäumte Vulkanisate, Zellgummi oder auch Moosgummi (J. Schnetger "Lexikon der Kautschuktechnik" 3. Auflage, Hüthig Verlag Heidelberg, 2004, Seiten 322-323 und 618). In einer bevorzugten Ausführungsform werden geschäumte Vulkanisate mit Hilfe von Treibmitteln hergestellt.

Bevorzugt wird die für das erfindungsgemäße Formgebungsverfahren einzusetzende mit Schwefel zu vernetzende Elastomer Komponente des Elastomer-Teilstücks im erfindungsgemäßen Verbund aus wenigstens einem Kautschuk, Schwefel und gegebenenfalls weiteren Bestandteilen mittels des Vorgangs der sogenannten Mischungsverarbeitung mit Hilfe eines Innenmischers oder eines Walzwerks zu einer vulkanisierfähigen Kautschukmischung verarbeitet und damit für das eigentliche Formgebungsverfahren vorbereitet. Bei dieser Mischungsverarbeitung werden die Bestandteile der Kautschukmischungen innig miteinander vermischt. Prinzipiell kann die Mischungsherstellung diskontinuierlich mittels Innermischer oder Walzwerk oder kontinuierlich mittels Extruder erfolgen (J. Schnetger "Lexikon der Kautschuktechnik" 3. Auflage, Hüthig Verlag Heidelberg, 2004, Seiten 275 und 315 bis 318).

## Polyamid-Komponente

Das für die Polyamid Komponente des erfindungsgemäßen Verbunds einzusetzende Polyamid wird bevorzugt aus einer Kombination von Diamin und Dicarbonsäure, aus einer $\omega$-Aminocarbonsäure oder aus einem Lactam hergestellt. Bevorzugt einzusetzende Polyamide sind PA6, PA6 6, PA6 10 [CAS Nr. 9011-52-3], PA8 8, PA6 12 [CAS Nr. 26098-55-5], PA8 10, PA10 8, PA9, PA6 13, PA6 14, PA8 12, PA10 10, PA10, PA8 14, PA14 8, PA10 12, PA11 [CAS Nr. 25035-04-5], PA10 14, PA12 12 oder PA12 [CAS Nr. 24937-16-4]. Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer $\alpha,\omega$-Aminocarbonsäure bzw. von dem davon abgeleiteten Lactam, im Falle des PA6 also dem $\varepsilon$-Caprolactam, ausgegangen worden ist; im Übrigen sei verwiesen auf H. Domininghaus, Die Kunststoffe und ihre Eigenschaften, Seiten 272 ff., VDI-Verlag, 1976. Erfindungsgemäß besonders bevorzugt wird für die im 2K-Spritzgießprozess einzusetzende Polyamidformmasse zur Herstellung des erfindungsgemäßen Verbunds PA6 [CAS Nr. 25038-54-4] oder PA6 6 [CAS Nr. 32131-17-2] eingesetzt, insbesondere PA6. Die Herstellung der Polyamide ist Stand der Technik. Selbstverständlich können aber auch auf den oben genannten Polyamiden basierende Copolyamide eingesetzt werden.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden. Die technisch relevanten Verfahren zur Herstellung der erfindungsgemäß einzusetzenden Polyamide verlaufen bevorzugt über die Polykondensation in der Schmelze oder über die Polyaddition von entsprechenden Lactamen. Zu den Polyadditionsreaktionen von Lactamen werden die hydrolytische, die alkalische, die aktivierte anionische sowie die kationische Lactampolymerisation gezählt. Die Herstellung von Polyamiden durch thermische Polykondensation sowie durch Lactampolymerisation ist dem Fachmann bekannt, siehe unter anderem Nylon Plastics Handbook, Hanser-Verlag München 1995, Seiten 17-27 und Kunststoff-Handbuch 3/4, Polyamide, Carl Hanser Verlag, München 1998, Seiten 22-57.

Erfindungsgemäß bevorzugt einzusetzende Polyamide sind teilkristalline, aliphatische Polyamide, die ausgehend von Diaminen und Dicarbonsäuren und/oder Lactamen mit wenigstens 5 Ringgliedern oder entsprechenden Aminosäuren hergestellt werden können. Gemäß DE 10 2011 084 519 A1 besitzen teilkristalline Polyamide eine Schmelzenthalpie von mehr als 25 J/g, gemessen mit der DSC-Methode gemäß ISO 11357 beim 2. Aufheizen und Integration des Schmelzpeaks. Sie unterscheiden sich dadurch von den semikristallinen Polyamiden, die eine Schmelzenthalpie im Bereich von 4 bis 25 J/g, gemessen mit der DSC-Methode gemäß ISO 11357 beim 2. Aufheizen und Integration des Schmelzpeaks und von den amorphen Polyamiden mit einer Schmelzenthalpie von weniger als 4 J/g, gemessen mit der DSC-Methode gemäß ISO 11357 beim 2. Aufheizen und Integration des Schmelzpeaks.

Als Edukte zur Herstellung des Polyamid basierten Teilstücks des erfindungsgemäßen Verbunds kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethane, Diaminodicyclohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt sind Polyamid 6 (PA6), Polyamid 6 6 (PA6 6) oder Caprolactam als Comonomer enthaltende Copolyamide, ganz besonders bevorzugt statistische, teilkristalline, aliphatische Copolyamide, insbesondere PA 6/6 6.

$\varepsilon$-Caprolactam [CAS Nr. 105-60-2] wird bevorzugt unter anderem zur Herstellung von Polyamid verwendet. Aus Cyclohexanon wird durch Umsetzung mit dem Hydrogensulfat oder dem Hydrochlorid des Hydroxylamins zunächst Cyclohexanonoxim hergestellt. Dieses wird durch eine Beckmann-Umlagerung in $\varepsilon$-Caprolactam umgewandelt.

Hexamethylendiaminadipat [CAS Nr. 3323-53-3] ist das Reaktionsprodukt von Adipinsäure und Hexamethylendiamin. Es wird unter anderem auch als Zwischenprodukt bei der Herstellung von Polyamid 6 6 verwendet. Der Trivialname AH-Salz leitet sich von den Anfangsbuchstaben der Ausgangssubstanzen ab. Erfindungsgemäß einzusetzendes teilkristallines PA6 und/oder PA 6 6 ist beispielsweise unter der Bezeichnung Durethan® bei der Lanxess Deutschland GmbH, Köln, Deutschland erhältlich.

Selbstverständlich können auch Mischungen dieser Polyamide eingesetzt werden, wobei das Mischungsverhältnis beliebig ist. Es können außerdem Anteile von rezyklierten Polyamid-Formmassen und / oder Faserrezyklaten in der Polyamid Komponente enthalten sein.

Ebenso können auch Mischungen verschiedener Polyamide, ausreichende Verträglichkeit vorausgesetzt, verwendet werden. Verträgliche Polyamidkombinationen sind dem Fachmann bekannt. Bevorzugt einzusetzende Polyamidkombinationen sind PA6/PA6 6, PA12/PA10 12, PA12/12 12, PA6 12/PA12, PA6 13/PA12, PA10 14/PA12 oder PA6 10/PA12 sowie entsprechende Kombinationen mit PA11, besonders bevorzugt PA6/PA6 6. Im Zweifelsfall können verträgliche Kombinationen durch Routineversuche ermittelt werden.

Anstelle von aliphatischen Polyamiden kann vorteilhafterweise auch ein teilaromatisches Polyamid verwendet werden, dessen Dicarbonsäureanteil zu 5 bis 100 Mol.-% von aromatischer Dicarbonsäure mit 8 bis 22 C-Atomen herrührt und das vorzugsweise einen Kristallitschmelzpunkt $T_m$ gemäß ISO 11357-3 von mindestens 250°C, besonders bevorzugt von mindestens 260°C und insbesondere bevorzugt von mindestens 270°C besitzt. Derartige Polyamide werden üblicherweise mit dem Zusatz T (= teilaromatisch) bezeichnet. Sie sind herstellbar aus einer Kombination von Diamin und Dicarbonsäure, gegebenenfalls unter Zusatz einer $\omega$-Aminocarbonsäure oder dem entsprechenden Lactam. Geeignete Typen sind bevorzugt PA6 6/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer $\omega$-Aminocarbonsäure bzw. einem Lactam. Das teilaromatische Polyamid kann auch als Blend mit einem anderen, bevorzugt aliphatischen Polyamid, eingesetzt werden, besonders bevorzugt mit PA6, PA6 6, PA11 oder PA12.

Eine andere geeignete Polyamidklasse sind transparente Polyamide; diese sind in den meisten Fällen amorph, können aber auch mikrokristallin sein. Sie können entweder für sich oder in Mischung mit aliphatischen und/oder teilaromatischen Polyamiden, bevorzugt mit PA6, PA6 6, PA11 oder PA12, eingesetzt werden. Zum Erzielen einer guten Haftung kommt es nicht auf das Ausmaß der Transparenz an; entscheidend ist hier, dass der Glasübergangspunkt $T_g$, gemessen gemäß ISO 11357-3, mindestens 110°C, bevorzugt mindestens 120°C, besonders bevorzugt mindestens 130°C und besonders bevorzugt mindestens 140°C beträgt. Bevorzugte transparente Polyamide sind:

- das Polyamid aus 1,12-Dodecandisäure und 4,4'-Diaminodicyclohexylmethan (PAPACM12), insbesondere ausgehend von einem 4,4'-Diaminodicyclohexylmethan mit einem trans,trans-Isomerenanteil von 35 bis 65%;
- das Polyamid aus Terephthalsäure und/oder Isophthalsäure und dem Isomerengemisch aus 2,2,4- und 2,4,4-Trimethylhexamethylendiamin,
- das Polyamid aus Isophthalsäure und 1,6-Hexamethylendiamin,
- das Copolyamid aus einem Gemisch aus Terephthalsäure/Isophthalsäure und 1.6-Hexamethylendiamin, gegebenenfalls in Mischung mit 4,4'-Diaminodicyclohexylmethan,
- das Copolyamid aus Terephthalsäure und/oder Isophthalsäure, 3,3'-Dimethyl-4,4'-diaminodicyclohexylmethan aus Laurinlactam oder Caprolactam,
- das (Co)Polyamid aus 1,12-Dodecandisäure oder Sebacinsäure, 3,3'-Dimethyl-4,4'diaminodicyclohexylmethan und gegebenenfalls Laurinlactam oder Caprolactam,
- das Copolyamid aus Isophthalsäure, 4,4'-Diaminodicyclohexylmethan und Laurinlactam oder Caprolactam,
- das Polyamid aus 1,12-Dodecandisäure und 4,4'-Diaminodicyclohexylmethan (bei niedrigem trans,trans-Isomerenanteil),

- das Copolyamid aus Terephthalsäure und/oder Isophthalsäure sowie einem alkylsubstituierten Bis(4-aminocyclohexyl)methan-Homologen, gegebenenfalls in Mischung mit Hexamethylendiamin,
- das Copolyamid aus Bis(4-amino-3-methyl-5-ethyl-cyclohexyl)methan, gegebenenfalls zusammen mit einem weiteren Diamin, sowie Isophthalsäure, gegebenenfalls zusammen mit einer weiteren Dicarbonsäure,
- das Copolyamid aus einer Mischung von m-Xylylendiamin und einem weiteren Diamin, z. B. Hexamethylendiamin, sowie Isophthalsäure, gegebenenfalls zusammen mit einer weiteren Dicarbonsäure wie z. B. Terephthalsäure und/oder 2,6-Naphthalindicarbonsäure,
- das Copolyamid aus einer Mischung von Bis(4-amino-cyclohexyl)methan und Bis-(4-amino-3-methyl-cyclohexyl)methan sowie aliphatischen Dicarbonsäuren mit 8 bis 14 C-Atomen, sowie
- Polyamide oder Copolyamide aus einer Mischung, die 1,14-Tetradecandisäure sowie ein aromatisches, arylaliphatisches oder cycloaliphatisches Diamin enthält.

Diese Beispiele können durch Hinzunahme weiterer Komponenten, bevorzugt Caprolactam, Laurinlactam oder Diamin/Dicarbonsäure-Kombinationen, oder durch teilweisen oder vollständigen Ersatz von Ausgangskomponenten durch andere Komponenten weitestgehend variiert werden.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprysäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden, insbesondere Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

Polyamidformmassen im Sinne dieser Erfindung sind Aufbereitungen von Polyamiden für die Herstellung der Polyamid Komponente im erfindungsgemäßen Verbund, die zur Verbesserung der Verarbeitungseigenschaften oder zur Modifizierung der Gebrauchseigenschaften vorgenommen wurden. Die Zubereitung der erfindungsgemäß für den Verbund einzusetzenden Polyamid basierten Komponente erfolgt durch Mischen der als Edukte einzusetzenden Komponenten Polyamid, Polyoctenamer und Polybutadien in wenigstens einem Mischwerkzeug. Hierdurch werden als Zwischenprodukte Formmassen erhalten. Diese Formmassen - oftmals auch als thermoplastische Formmassen bezeichnet - können entweder ausschließlich aus den Komponenten Polyamid, Polyoctenamer und Polybutadien bestehen, oder aber zusätzlich zu diesen Komponenten noch weitere Komponenten enthalten. In letzterem Fall ist wenigstens eine der Komponenten Polyamid, Polyoctenamer und Polybutadien im Rahmen der angegebenen Mengenbereiche so zu variieren, dass die Summe aller Gewichtsteile in der Polyamid basierten Komponente stets 100 ergibt.

In einer bevorzugten Ausführungsform enthalten diese Polyamidformmassen zusätzlich zum Polyamid, dem Polyoctenamer und dem Polybutadien wenigstens einen der folgenden Zusätze

(I) andere Polymere wie etwa Schlagzähmodifikatoren, ABS (ABS = AcrylnitrilButadien-Styrol) oder Polyphenylenether. Hierbei ist darauf zu achten, dass keine Phasenumkehr stattfindet, dass also die Matrix der Formmasse aus Polyamid gebildet wird, oder dass zumindest ein interpenetrierendes Netzwerk vorliegt. Dem Fachmann ist bekannt, dass die Phasenmorphologie in erster Linie von den Volumenanteilen der einzelnen Polymere sowie den Schmelzeviskositäten abhängt. Wenn das andere Polymer eine deutlich höhere Schmelzeviskosität als das Polyamid besitzt, bildet das Polyamid auch dann die Matrix, wenn es zu weniger als 50 Volumenprozent des Thermoplastanteils, beispielsweise zu etwa 40 Volumenprozent, vorliegt. Dies ist insbesondere bei Blends mit Polyphenylenether relevant;

(II) faserförmige Verstärkungsstoffe, insbesondere Glasfasern mit rundem oder flachem Querschnitt, Carbonfasern, Aramidfasern, Fasern aus rostfreiem Stahl oder Kaliumtitanatwhisker;

(III) Füllstoffe, insbesondere Talkum, Glimmer, Silikat, Quarz. Zirkondioxid, Aluminiumoxid, Eisenoxide, Zinksulfid, Graphit, Molybdändisulfid, Titandioxid, Wollastonit, Kaolin, amorphe Kieselsäuren, Magnesiumcarbonat, Kreide, Kalk, Feldspat, Bariumsulfat, Leitfähigkeitsruß, Graphitfibrillen, Vollglaskugeln, Hohlglaskugeln oder gemahlenes Glas;

(IV) Weichmacher, insbesondere Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure;

(V) Pigmente und/oder Farbstoffe, insbesondere Ruß, Eisenoxid, Zinksulfid, Ultramarin, Nigrosin, Perlglanzpigmente oder Metallflitter;

(VI) Flammschutzmittel, insbesondere Antimontrioxid, Hexabromcyclododecan, Tetrabrombisphenol, Borate, roter Phosphor, Magnesiumhydroxid, Aluminiumhydroxid, Melamincyanurat und dessen Kondensationsprodukte wie Melam, Melem, Melon, Melaminverbindungen, insbesondere Melaminpyrophosphat oder Melaminpolyphosphat, Ammoniumpolyphosphat sowie phosphororganische Verbindungen bzw. deren Salze, insbesondere Resorcinoldiphenylphosphat, Phosphonsäureester oder Metallphosphinate;

(VII) Verarbeitungshilfsmittel, insbesondere Paraffine, Fettalkohole, Fettsäureamide, Fettsäureester, verseifte Fettsäuren, Paraffinwachse, Montanate, Montanwachse oder Polysiloxane sowie

(VIII) Stabilisatoren, insbesondere Kupfersalze, Molybdänsalze, Kupferkomplexe, Phosphite, sterisch gehinderte Phenole, sekundäre Amine, UV-Absorber oder HALS-Stabilisatoren.

Das erfindungsgemäß einzusetzende Gemisch aus Polyoctenamer und Polybutadien wird auf verschiedene Weise ins Polyamid bzw. in die Polyamidformmasse für das wenigstens eine Polyamid-Teilstück des erfindungsgemäßen Verbundteils eingearbeitet. In einer bevorzugten Ausführungsform wird das Polyoctenamer und das Polybutadien, auch als Masterbatch aus Polyoctenamer und Polybutadien, entweder während der Compoundierung der Polyamidformmassen zusammen mit den übrigen Zuschlagstoffen dem Polyamid beigefügt, oder als Masterbatch dem Polyamid während der Compoundierung zugegeben, oder beim Spritzgieß-Prozess als Mischung mit der Polyamid Formmasse, die vorzugsweise als Granulat eingesetzt wird, über einen Dosiertrichter dem Spritzaggregat zugeführt.

In einer alternativen bevorzugten Ausführungsform wird die Polyoctenamer/Polybutadienenthaltende Polyamidformmasse in Form einer Granulatmischung (Trockenmischung, Dry Blend, siehe Die Kunststoffe - Chemie, Physik, Technologie, hrsg. von B. Carlowitz, Carl Hanser Verlag München Wien, 1990, S. 266) aus mindestens einer Polyamid Formmasse, die mindestens ein Polyoctenamer und/oder mindestens ein Polybutadien enthält, und einer Polyamid Formmasse, die weder Polyoctenamer noch Polybutadien enthält, hergestellt und damit eine Polyamid Formmasse mit einer angepassten Polyoctenamer/Polybutadien-Konzentration erhalten.

In einer weiteren alternativen bevorzugten Ausführungsform wird mindestens eine Lösung die mindestens ein Polyoctenamer und/oder mindestens ein Polybutadien enthält in einem geeignetem Lösungsmittel mit einer Lösung Polyamid in einem geeignetem Lösungsmittel gemischt. Wenn man ausgehend von dieser Lösung die Lösungsmittel abdestilliert, erhält man nach Trocknung die Polyoctenamer/Polybutadien-enthaltende Polyamidformmasse.

In einer weiteren alternativen bevorzugten Ausführungsform erfolgt die Zugabe von Polyoctenamer und Polybutadien, alternativ auch als Masterbatch aus Polyoctenamer und Polybutadien, beim Spritzgieß-Prozess als Mischung mit der Polyamid Formmasse, die zumeist als Granulat eingesetzt wird, über einen Dosiertrichter des Spritzaggregats.

Erfindungsgemäß besonders bevorzugt erfolgt die Zugabe von Polyoctenamer und Polybutadien, alternativ auch als Masterbatch aus Polyoctenamer und Polybutadien, zum Polyamid über eine Dosiervorrichtung, für feste Stoffe bevorzugt über einen Dosiertrichter, für flüssige Stoffe bevorzugt über eine Dosierpumpe, während der Compoundierung zusammen mit den übrigen Zuschlagstoffen.

**Formgebungsverfahren**

Der erfindungsgemäße Verbund kann einstufig oder zweistufig durch wenigstens ein Formgebungsverfahren der Reihe Extrusion, Flachfolienextrustion, Folienblasen, Extrusionsblasformen, Coextrusion, Kalandrieren, Gießen, Pressverfahren, Spritzprägeverfahren, Transferpressverfahren, Transferspritzpressverfahren oder Spritzgießen oder dessen Sonderverfahren, insbesondere Gasinjektionstechnik, hergestellt werden, bevorzugt durch Mehr-Komponenten-Spritzgießen, besonders bevorzugt durch 2-Komponenten-Spritzgießen, auch als 2K-Spritzguß bezeichnet.

Unter dem Formgebungsverfahren der Extrusion wird erfindungsgemäß die kontinuierliche Herstellung von Kunststoff-Halbzeugen, insbesondere von Folien, Platten, Rohren oder Profilen, verstanden. Beim Extrusionsverfahren presst der sogenannte Extruder, bestehend aus Schnecke und Zylinder, die Kunststoffmasse unter Druck kontinuierlich durch ein Formwerkzeug. In der Praxis werden Einschnecken-, Zweischnecken-Extruder oder Sonderbauarten eingesetzt. Mit der Wahl des Formwerkzeugs wird die gewünschte Querschnittsgeometrie des Extrudats eingestellt (Ullmann's Encyclopedia of Industrial Chemistry, 7th Edition, Vol. 28, Plastics Processing, Wiley-VCH Verlag, Weinheim, 2011, S. 169 bis 177).

Bei der Extrusion von Kautschukmischungen erfolgt nach dem Durchgang durch das Formwerkzeug noch die Vulkanisation. Hier wird zwischen Vulkanisationsverfahren unter Druck und drucklosen Vulkanisationsverfahren unterschieden (F. Röthemeyer, F. Sommer "Kautschuktechnologie", 2. überarbeitete Auflage, Carl Hanser Verlag München Wien, 2006, Seite 597 bis 727). Beim Formgebungsverfahren der Coextrusion werden Polyamidformmassen und Kautschukmassen vor der formgebenden Öffnung zusammengebracht, um nach der Vulkanisation des Extrudats einen Verbund aus Polyamid und Elastomer zu erhalten (Ullmann's Encyclopedia of Industrial Chemistry, 7th Edition, Vol. 28, Plastics Processing, Wiley-VCH Verlag, Weinheim, 2011, S. 177). Die Coextrusion von Polyamidformmasse und Kautschukmasse kann auch sequentiell, d.h. nachgeschaltet, erfolgen (F. Röthemeyer, F. Sommer "Kautschuktechnologie", 2. überarbeitete Auflage, Carl Hanser Verlag München Wien, 2006, Seite 852 bis 853). Beim Beaufschlagen und Ausvulkanisieren nach dem zweistufigen Extrusionsverfahren wird ein in einer ersten Stufe hergestelltes Profil aus einer Polyamidformmasse, z. B. ein Rohr, mit einer Kautschukmasse ummantelt und gegebenenfalls unter Druck ausvulkanisiert. Entsprechend verfährt man mit Platten aus Polyamidformmassen (F. Röthemeyer, F. Sommer "Kautschuktechnologie", 2. Überarbeitete Auflage, Carl Hanser Verlag München Wien, 2006, Seite 977 bis 978).

Mit den Formgebungsverfahren Flachfolienextrustion, Folienblasen, Extrusionsblasformen, Coextrusion, Kalandrieren oder Gießen können Folien oder Laminate erhalten werden (Die Kunststoffe - Chemie, Physik, Technologie, hrsg. von B. Carlowitz, Carl Hanser Verlag München Wien, 1990, S. 422 bis 480). Polyamide und mit Schwefel zu vernetzende Kautschukmischungen können mit diesen Verfahren zu Mehrschicht-Laminaten und Mehrschicht-Folien verbunden werden. Gegebenenfalls wird nach der Folienherstellung die Kautschuk Komponente ausvulkanisiert. Coextrudierte Mehrschicht-Folien sind für die Verpackungstechnik von großer Bedeutung.

Beim Pressverfahren (Compression Molding) werden zunächst über Extrusion mit anschließendem Stanzen oder Schneiden aus der unvulkanisierten Kautschukmischung Rohlinge hergestellt. Die Rohlinge werden in die Kavitäten eines auf Vulkanisationstemperatur vorgeheizten Werkzeugs eingelegt. Unter Anwendung von Druck und Wärme erfolgt die Formgebung in die gewünschte Formteilgeometrie und die Vulkanisation setzt ein (F. Röthemeyer, F. Sommer "Kautschuktechnologie", 2. überarbeitete Auflage, Carl Hanser Verlag München Wien, 2006, Seite 729 bis 738). Beim Compression Molding von Thermoplasten verfährt man analog. Hier wird das Werkzeug bis zum Entformen abgekühlt (Ullmann's Encyclopedia of Industrial Chemistry, 7th Edition, Vol. 28, Plastics Processing, Wiley-VCH Verlag, Weinheim, 2011, S. 167).

Das Spritzprägen (Injection-Compression Molding) ist ein Sonderverfahren des Spritzgießens zur Herstellung hochgenauer Kunststoffteile ohne Verzug. Dabei wird die Kunststoffschmelze nur unter erniedrigter Schließkraft in das Werkzeug eingespritzt, was zu einem leichten Öffnen der Werkzeughälften führt. Für die Ausfüllung der gesamten Werkzeugkavität wird die volle Schließkraft appliziert und so das Formteil endgültig ausgeformt (Ullmann's Encyclopedia of Industrial Chemistry, 7th Edition, Vol. 28, Plastics Processing, Wiley-VCH Verlag, Weinheim, 2011, S. 187). Beim Spritzprägen von Kautschuken verfährt man analog, indem die Kautschukmischung in ein auf Vulkanisationstemperatur geheiztes Werkzeug gespritzt wird. Mit Schließen des Werkzeugs erfolgt die Formgebung und die Vulkanisation (F. Röthemeyer, F. Sommer "Kautschuktechnologie", 2. Überarbeitete Auflage, Carl Hanser Verlag München Wien, 2006, Seite 738 bis 739).

Zum Transferpressverfahren und Transferspritzpressverfahren siehe F. Röthemeyer, F. Sommer "Kautschuktechnologie", 2. überarbeitete Auflage, Carl Hanser Verlag München Wien, 2006, Kapitel 12.3 und 12.4, Seite 740 bis 753, und Kapitel 12.5., Seite 753 bis 755.

Das Spritzgießen - oft auch als Spritzguss oder Spritzgussverfahren bezeichnet - ist ein Urformverfahren, das hauptsächlich in der Kunststoffverarbeitung eingesetzt wird. Mit diesem Verfahren lassen sich wirtschaftlich direkt verwendbare Formteile ohne Nachbearbeitung in großer Stückzahl herstellen. Dazu wird mit einer Spritzgießmaschine der jeweilige polymere Werkstoff in einer Spritzeinheit plastifiziert und in ein Spritzgießwerkzeug eingespritzt. Der Hohlraum, die Kavität, des Werkzeugs bestimmt die Form des fertigen Teils. Es sind heute Teile von wenigen zehntel Gramm bis in den größeren Kilogramm-Bereich durch Spritzgießen herstellbar (Ullmann's Encyclopedia of Industrial Chemistry, 7th Edition, Vol. 28, Plastics Processing, Wiley-VCH Verlag, Weinheim, 2011, S. 181 bis 189).

Beim Mehrkomponenten-Spritzgießen werden mehrere Komponenten im Spritzguss-Verfahren zu einem Verbundteil verbunden. Beim 2-Komponenten-Spritzgießen werden zwei Komponenten im Spritzguss-Verfahren zu einem Verbund bzw. Verbundteil verbunden. Bevorzugt werden erfindungsgemäß eine Polyamid Komponente und eine Elastomer Komponente im 2-Komponenten-Spritzguß-Verfahren zu einem Verbund verbunden. Das 2-Komponenten-Spritzguß-Verfahren kann sowohl in einem einstufigen Prozess als auch in einem zweistufigen Prozess betrieben werden (F. Johannaber, W. Michaeli, Handbuch Spritzgießen, 2. Auflage, Carl Hanser Verlag München, 2004, Seite 506 bis 523; Handbuch Kunststoff-Verbindungstechnik, hrsg. von G. W. Ehrenstein, Carl Hanser Verlag München Wien, 1990, Seite 517 bis 540).

Beim zweistufigen Prozess wird aus der erfindungsgemäß einzusetzenden Polyoctenamer/Polybutadien enthaltenden Polyamidformmasse zunächst das steife, thermoplastische Formteil insbesondere durch eines der oben genannten Verarbeitungsverfahren, bevorzugt durch Spritzgießen, hergestellt. Dieses thermoplastische Formteil kann bei Bedarf gelagert werden.

In einem weiteren Schritt wird das Polyamidformteil mit der Elastomer-Komponente mittels eines der oben genannten Verarbeitungsverfahren, bevorzugt durch Spritzgießen, beaufschlagt und den Vulkanisationsbedingungen des Kautschuks ausgesetzt.

Die Fertigung kann auch mit einer Maschine erfolgen (einstufiger Prozess), die bevorzugt über eine Wendeplatte oder einen Drehteller, und/oder über entsprechende Werkzeugtechnik, bevorzugt mittels Schiebern, verfügt, die zeitlich verzögert Bereiche der Kavität für die zweite Komponente freigeben. Beim Einsatz einer Maschine, die über eine Wendeplatte, einen Drehteller oder ein Werkzeug, das über einen oder mehrere Schieber verfügt, wird üblicherweise in einem ersten Takt ein Vorspritzling aus der Polyamid Komponente in einer Kavität des Werkzeuges, der ersten Station, hergestellt. Nach einer Drehbewegung des Werkzeuges, oder mittels Umsetztechnik, wird der Vorspritzling in eine zweite, geometrisch veränderte Fertigspritz-Station gebracht (beispielsweise mittels der Drehtechnik durch eine Drehung um 180° bzw. 120° bei Dreikavitätenwerkzeugen oder mittels einer Sperrschieber-Technik, sogenanntes Core-Back-Verfahren) und in einem zweiten Takt wird die Kautschukmischung für das Elastomer-Teilstück, erhältlich aus mit elementarem Schwefel zu vulkanisierenden bzw. zu vernetzenden Kautschuk, eingespritzt. Nach Erreichen der Entformungsstabilität der Elastomer Komponente kann entformt werden.

Die Schmelzetemperaturen des erfindungsgemäß als thermoplastische Komponente einzusetzenden Polyamids liegen bevorzugt im Bereich von 180 bis 340°C, besonders bevorzugt im Bereich von 200 bis 300°C. Die Werkzeugtemperaturen der thermoplastischen Temperierbereiche liegen bevorzugt im Bereich von 20 bis 200°C, besonders bevorzugt im Bereich von 60 bis 180°C. Bevorzugte Massetemperaturen der Kautschukmischung für das Elastomer-Teilstück, erhältlich aus mit elementarem Schwefel zu vulkanisierenden bzw. zu vernetzenden Kautschuk, im Plastifizierzylinder liegen im Bereich von 20 bis 150°C, bevorzugt im Bereich von 60 bis 100°C. Bevorzugte Vulkanisationstemperaturen der Elastomer Komponente liegen im Bereich von 120 bis 220°C, bevorzugt im Bereich von 140 bis 200°C. In einer bevorzugten Ausführungsform erfolgt nach dem Entformen der Elastomer Komponente aus der Werkzeugkavität eine Temperung. Im physikalischen Sinn bedeutet Tempern, dass ein Festkörper auf eine Temperatur unterhalb der Schmelztemperatur erhitzt wird. Dies geschieht über eine längere Zeit hinweg - einige Minuten bis hin zu einigen Tagen -. Durch die erhöhte Beweglichkeit der Atome können so Strukturdefekte ausgeglichen und die Kristallstruktur in der Nah- und Fernordnung verbessert werden. Auf diese Weise kann der Prozess des Schmelzens und (extrem) langsamen Abkühlens zur Einstellung der Kristallstruktur vermieden werden. Eine Temperung im Sinne der vorliegenden Erfindung erfolgt bevorzugt bei einer Temperatur im Bereich von 120 bis 220°C, bevorzugt bei einer Temperatur im Bereich von 140 bis 200°C.

Diese Werte sind erheblich abhängig von der Bauteilgeometrie (z. B. der Dicke sowie der Fließweglänge), der Art und Lage der Angussgestaltung (z. B. Heiß- oder Kaltkanal), sowie von den spezifischen Materialkennwerten. Die Nachdruckphase liegt bevorzugt in Bereichen von 0 bis 3000 bar bei Nachdruckzeiten von 0 Sekunden bis zum Öffnen des Werkzeuges.

In einer alternativen, bevorzugten Ausführungsform der vorliegenden Erfindung wird der erfindungsgemäße Verbund aus einem Polyamid-Teilstück und einem Elastomer-Teilstück im sogenannten umgekehrten 2-Komponenten-Spritzguß (2K-Spritzguß) gefertigt, d.h. in der Reihenfolge erst die weiche Komponente, dann die harte Komponente, wobei das Polyamid-Teilstück wiederum aus der erfindungsgemäß einzusetzenden Polyoctenamer und Polybutadien enthaltenden Polyamidformmasse und das Elastomer-Teilstück aus dem in Anwesenheit von freiem Schwefel zu vernetzenden Kautschuk gefertigt werden.

Im umgekehrten 2K-Spritzguß wird also zunächst die Kautschukmischung für das Elastomer-Teilstück, erhältlich aus mit elementarem Schwefel zu vulkanisierenden bzw. zu vernetzenden Kautschuk, spritzgegossen und vulkanisiert, danach wird die erfindungsgemäß einzusetzende, Polyoctenamer und Polybutadien enthaltende, Polyamidformmasse aufgespritzt. Genau wie beim (konventionellen) 2K-Spritzgieß-Prozess kann die Fertigung in einer Maschine (einstufiger Prozess) erfolgen, die bevorzugt über eine Wendeplatte oder einen Drehteller, und/oder über entsprechende Werkzeugtechnik, bevorzugt mittels Schiebern, verfügt, die zeitlich verzögert Bereiche der Kavität für die zweite Komponente freigeben. Die entsprechenden Spritzgieß-Parameter können vom (konventionellen) 2K-Spritzgieß-Prozess übernommen werden (Zylindertemperaturen, Werkzeugtemperaturen, Vulkanisationszeiten, Nachdruck, Nachdruckzeiten, etc). Wenn man die Elastomer Komponente nicht ausvulkanisiert, sondern nur bis zur Formstabilität anvulkanisiert und dann die Polyamidformmasse aufspritzt, erfährt man einen Vorteil des umgekehrten 2K-Spritzgieß-Prozesses. Auf diese Art und Weise lässt sich nämlich die Zykluszeit für die Herstellung des gesamten Verbundteils verkürzen. Da die Zykluszeit für die Herstellung der Polyamid Komponente üblicherweise sehr viel kleiner ist als die der Elastomer Komponente, kann nach diesem bevorzugten Verfahren überraschenderweise die Zykluszeit für die Herstellung des gesamten Verbunds auf die Zykluszeit für die Herstellung der Elastomer Komponente reduziert werden. In einer bevorzugten Ausführungsform erfolgt auch im umgekehrten 2K-Spritzguß nach dem Entformen des Verbunds aus der Werkzeugkavität eine Temperung.

Das Verfahren des Spritzgießens von Polyamid zeichnet sich dadurch aus, dass der Rohstoff, also die einzusetzende erfindungsgemäße Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet im Spritzgießprozess die Teilschritte:

1. Plastifizieren / Aufschmelzen

2. Einspritzphase (Füllvorgang)

3. Nachdruckphase (wegen thermischer Kontraktion bei der Kristallisation)

4. Entformen.

Eine zu diesem Zweck einzusetzende Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und gegebenenfalls die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gekühlt und somit das zu fertigende Bauteil bzw. das Erzeugnis oder der Formkörper gefertigt. Notwendig dazu sind immer zwei Werkzeughälften. Beim Spritzguss unterscheidet man folgende Funktionskomplexe:

- Angusssystem

- Formbildende Einsätze

- Entlüftung

- Maschinen- und Kraftaufnahme

- Entformungssystem und Bewegungsübertragung

- Temperierung.

Zum Spritzgießen von Polyamiden siehe auch Kunststoff-Handbuch 3/4, Polyamide, Carl Hanser Verlag, München 1998, Seiten 315-352.

Das Verfahren des Spritzgießens zur Herstellung von Gummiformteilen zeichnet sich dadurch aus, dass der Rohstoff, also die zu vernetzende Kautschukmischung, in einem beheizten zylindrischen Hohlraum plastifiziert und als Spritzmasse unter Druck in einem auf Vulkanisationstemperatur temperierten Hohlraum gespritzt wird. Nach dem Ausvulkanisieren der Masse wird das Spritzgussteil entformt. Zylinder und Schnecken der Spritzgießmaschine sind in für den Fachmann bekannter Weise für die Kautschukverarbeitung ausgelegt und das Werkzeug auf Vulkanisationstemperatur beheizbar. Die Vulkanisationszeiten der Kautschuk Komponente richten sich außer nach der Kautschukmischung nach den Vulkanisationstemperaturen und nach der Geometrie der zu fertigenden Kautschuk Komponente. Sie liegen bevorzugt zwischen 15 s und 15 min; niedrigere Temperaturen und dickere Kautschukteile erfordern längere Vulkanisationszeiten (F. Röthemeyer, F. Sommer "Kautschuktechnologie", 2. überarbeitete Auflage, Carl Hanser Verlag München Wien, 2006, Seite 755 bis 815).

Im Falle des gegebenenfalls zusätzlichen Einsatzes äußerer Entformungshilfsmittel ist dafür Sorge zu tragen, dass diese nicht in die Grenzschicht der Werkstoffe gelangen, da sie die Verbundhaftung beeinträchtigen können. Als erfindungsgemäß gegebenenfalls einzusetzende Entformungsmittel (auch als Gleitmittel oder Formtrennmittel bezeichnet) kommen bevorzugt gesättigte und teilweise ungesättigte Fett- und Ölsäuren und deren Derivate, insbesondere Fettsäureester, Fettsäuresalze, Fettalkohole, Fettsäureamide, die vorzugsweise als Mischungsbestandteil Verwendung finden, in Betracht sowie weiterhin auf die Formoberfläche applizierbare Produkte, insbesondere Produkte auf Basis von niedermolekularen Silikonverbindungen, Produkte auf Basis von Fluorpolymeren sowie Produkte auf Basis von Phenolharzen.

Die Entformungsmittel werden als Mischungsbestandteil bevorzugt in Mengen von ca. 0,1 bis 10 phr, besonders bevorzugt 0,5 bis 5 phr, bezogen auf 100 phr der Elastomer(e) in der Kautschuk-Komponente eingesetzt.

In bevorzugter Ausführung betrifft die vorliegende Erfindung einen Verbund in Direkthaftung aus mindestens einem Teilstück hergestellt aus mindestens einer Polyamidformmasse und mindestens einem Elastomer Teilstück, dadurch gekennzeichnet, dass die Polyamidformmasse zu mindestens 30 Gew.-% eine Mischung von

a) 60 bis 99,9 Gew.-Teile PA6 oder PA66 sowie

b) 0,1 bis 40 Gew.-Teile eines Gemisches von wenigstens einem Polybutadien mit einem zahlenmittleren Molekulargewicht Mn im Bereich von 800 bis 20.000 g/mol und/oder mit einer dynamischen Viskosität, gemessen mit der Kegel-Platten-Methode nach DIN 53019 bei Normaldruck und bei einer Temperatur von 25°C, im Bereich von 100 bis 15.000 mPas mit 1,8-trans-Polyoctenamer

enthält, wobei die Summe der Gew.-Teile von a) und b) 100 beträgt und für das Elastomer Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung einen Verbund in Direkthaftung aus mindestens einem Teilstück hergestellt aus mindestens einer Polyamidformmasse und mindestens einem Elastomer Teilstück, dadurch gekennzeichnet, dass die Polyamidformmasse zu mindestens 30 Gew.-% eine Mischung von

a) 60 bis 99,9 Gew.-Teile PA6 sowie

b) 0,1 bis 40 Gew.-Teile eines Gemisches von wenigstens einem Polybutadien mit einem zahlenmittleren Molekulargewicht Mn im Bereich von 800 bis 20.000 g/mol und/oder mit einer dynamischen Viskosität, gemessen mit der Kegel-Platten-Methode nach DIN 53019 bei Normaldruck und bei einer Temperatur von 25°C, im Bereich von 100 bis 15.000 mPas mit 1,8-trans-Polyoctenamer

enthält, wobei die Summe der Gew.-Teile von a) und b) 100 beträgt und für das Elastomer Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung einen Verbund in Direkthaftung aus mindestens einem Teilstück hergestellt aus mindestens einer Polyamidformmasse und mindestens einem Elastomer Teilstück, dadurch gekennzeichnet, dass die Polyamidformmasse zu mindestens 30 Gew.-% eine Mischung von

a) 60 bis 99,9 Gew.-Teile PA66 sowie

b) 0,1 bis 40 Gew.-Teile eines Gemisches von wenigstens einem Polybutadien mit einem zahlenmittleren Molekulargewicht Mn im Bereich von 800 bis 20.000 g/mol und/oder mit einer dynamischen Viskosität, gemessen mit der Kegel-Platten-Methode nach DIN 53019 bei Normaldruck und bei einer Temperatur von 25°C, im Bereich von 100 bis 15.000 mPas mit 1,8-trans-Polyoctenamer

enthält, wobei die Summe der Gew.-Teile von a) und b) 100 beträgt und für das Elastomer Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung einen Verbund in Direkthaftung aus mindestens einem Teilstück hergestellt aus mindestens einer Polyamidformmasse und mindestens einem Elastomer Teilstück, dadurch gekennzeichnet, dass die Polyamidformmasse zu mindestens 30 Gew.-% eine Mischung von

a) 60 bis 99,9 Gew.-Teile PA6 sowie

b) 0,1 bis 40 Gew.-Teile eines Gemisches von wenigstens einem Polybutadien mit einem zahlenmittleren Molekulargewicht Mn im Bereich von 800 bis 20.000 g/mol und/oder mit einer dynamischen Viskosität, gemessen mit der Kegel-Platten-Methode nach DIN 53019 bei Normaldruck und bei einer Temperatur von 25°C, im Bereich von 100 bis 15.000 mPas mit 1,8-trans-Polyoctenamer

enthält, wobei die Summe der Gew.-Teile von a) und b) 100 beträgt und für das Elastomer Teilstück mit elementarem Schwefel als Vernetzungsmittel zu vernetzender Kautschuk EPDM eingesetzt wird.

In bevorzugter Ausführung betrifft die vorliegende Erfindung einen Verbund in Direkthaftung aus mindestens einem Teilstück hergestellt aus mindestens einer Polyamidformmasse und mindestens einem Elastomer Teilstück, dadurch gekennzeichnet, dass die Polyamidformmasse zu mindestens 30 Gew.-% eine Mischung von

a) 60 bis 99,9 Gew.-Teile PA66 sowie

b) 0,1 bis 40 Gew.-Teile eines Gemisches von wenigstens einem Polybutadien mit einem zahlenmittleren Molekulargewicht Mn im Bereich von 800 bis 20.000 g/mol und/oder mit einer dynamischen Viskosität, gemessen mit der Kegel-Platten-Methode nach DIN 53019 bei Normaldruck und bei einer Temperatur von 25°C, im Bereich von 100 bis 15.000 mPas mit 1,8-trans-Polyoctenamer

enthält, wobei die Summe der Gew.-Teile von a) und b) 100 beträgt und für das Elastomer Teilstück mit elementarem Schwefel als Vernetzungsmittel zu vernetzender Kautschuk EPDM eingesetzt wird.

Bevorzugt liegen in den hier genannten Ausführungsformen das Polyoctenamer und das Polybutadien im Massenverhältnis zueinander im Bereich von 1 Teil Polyoctenamer zu 4 Teilen Polybutadien bis 4 Teile Polyoctenamer zu 1 Teil Polybutadien vor.

Die Erfindung betrifft schließlich auch ein Verfahren zur Herstellung eines Verbunds in Direkthaftung aus mindestens einem Teilstück hergestellt aus mindestens einer Polyamidformmasse und mindestens einem Teilstück hergestellt aus wenigstens einem Elastomer, vorzugsweise erhältlich aus mit elementarem Schwefel als Vernetzungsmittel zu vulkanisierenden bzw. zu vernetzenden Kautschuk, und vorzugsweise Verzicht auf jeglichen Haftvermittler, durch wenigstens ein Formgebungsverfahren der Reihe Extrusion, Flachfolienextrustion, Folienblasen, Extrusionsblasformen, Coextrusion, Kalandrieren, Gießen, Pressverfahren, Spritzprägeverfahren, Transferpressverfahren, Transferspritzpressverfahren oder Spritzgießen oder dessen Sonderverfahren, insbesondere Gas-Injektionstechnik, indem entweder das Teilstück aus der Polyamidformmasse mit einer Kautschuk Komponente beaufschlagt und den Vulkanisationsbedingungen des Kautschuks ausgesetzt wird, oder das Teilstück aus Kautschuk mit einer Polyamidformmasse beaufschlagt wird und die Formmasse wenigstens eines Teilstücks, vorzugsweise die Polyamidformmasse, das Gemisch von Polyoctenamer und Polybutadien enthält.

Die vorliegende Erfindung betrifft aber auch die Verwendung eines Gemisches von Polyoctenamer und Polybutadien zur Herstellung eines Verbunds in Direkthaftung aus mindestens einem Teilstück aus mindestens einer Polyamidformmasse und mindestens einem Teilstück aus wenigstens einem Elastomer, vorzugsweise erhältlich aus mit elementarem Schwefel zu vulkanisierenden bzw. zu vernetzenden Kautschuk, wobei das Gemisch in der Formmasse wenigstens eines Teilstücks, vorzugsweise in der Polyamidformmasse, eingesetzt wird.

**Beispiele:**

**1. Eingesetzte Polyamid Komponenten:**

Die Zusammensetzungen der Polyamid Komponenten sind in Tabelle 1 zusammengefasst.

Die Angabe der Bestandteile der Polyamid Komponenten erfolgt in Massenanteilen bezogen auf die Gesamtformmasse.

**Tabelle 1: Zusammensetzung der Polyamidformmasse für die Polyamid-basierte Komponente des Verbundes**

| Polyamid Komponente | 1 | 2 | 3 | 4 | 5 |
|---|---|---|---|---|---|
| Bestandteil A | 95 | 95 | 95 | 95 | 95 |
| Bestandteil B | 5 | 0 | 1 | 2,5 | 4 |
| Bestandteil C | 0 | 5 | 4 | 2,5 | 1 |
| Summe der Massenanteile Bestandteile B und C | 5 | 5 | 5 | 5 | 5 |

Produktnamen und Hersteller der Bestandteile der Polyamid Komponenten in Tabelle 1:

Bestandteil A = Durethan® BKV30 H2.0 901510 der LANXESS Deutschland GmbH, Köln, mit der ISO Formmassenbezeichnung ISO 1874-PA6, GHR, 14-090, GF 30, ein wärmestabilisiertes, mit 30% Glasfasern versetztes Polyamid 6

Bestandteil B = Polyoctenamer, Vestenamer® 8012 (1,8-trans-Polyoctenamer), 80% trans, gewichtsmittleres Molekulargewicht Mw 90.000 g/mol, $T_m$= 54° C, 30% kristallin (Herstellerangaben), der Evonik Industries AG, Marl

Bestandteil C = Polybutadien, LBR-307B (flüssiges Polybutadien) mit einer dynamischen Viskosität bei 25°C (DIN 53019) von 2.210 mPas und einem gewichtsmittleren Molekulargewicht Mw im Bereich von 8.000 g/mol (Herstellerangabe) der Kuraray Europe GmbH, Hattersheim am Main

**Herstellung der Polyamid Komponenten in Tabelle 1:**

Das Vermischen der Bestandteile der Polyamid Komponenten 1 bis 5 gemäß Tabelle 1 zu Polyamid Formmassen erfolgte in einem Doppelschneckenextruder des Typs Leistritz ZSE 27 MAXX der Leistritz Extrusionstechnik GmbH, Nürnberg. Bei allen Polyamid Komponenten wurde die Compoundierung mit einer Massentemperatur von 260 bis 300°C und mit einem Durchsatz von 8 bis 60 kg/h durchgeführt. Die Schmelze wurde als Strang in ein Wasserbad ausgetragen und anschließend granuliert.

Nach Compoundierung wurden die Polyamid Formmassen über 4 Stunden im Trockenlufttrockner bei 80°C getrocknet, bevor sie anschließend im Spritzguss verarbeitet wurden.

In Tabelle 2 sind die für die Polyamid Komponenten 1 bis 5 resultierenden Massenverhältnisse Polyoctenamer zu Polybutadien aufgeführt.

**Tabelle 2: Massenverhältnisse Polyoctenamer zu Polybutadien der Polyamid Komponenten 1 bis 5**

| Polyamid Komponente | 1 | 2 | 3 | 4 | 5 |
|---|---|---|---|---|---|
| Teile Polyoctenamer | 5 | 0 | 1 | 1 | 4 |
| Teile Polybutadien | 0 | 5 | 4 | 1 | 1 |

**2. Eingesetzte Elastomer Komponenten:**

Die Zusammensetzungen der Kautschukmischungen der nach Vulkanisation resultierenden Elastomer Komponenten sind in Tabelle 3 zusammengefasst.

Die Angabe der Kautschukmischungsbestandteile der Elastomer Komponenten erfolgt in Massenteilen bezogen auf 100 Massenteile Kautschuk.

**Tabelle 3: Zusammensetzung der Kautschukmischungen der nach Vulkanisation resultierenden Elastomer Komponenten**

| Elastomer Komponente | A |
|---|---|
| Keltan® 2450 | 100 |
| N550 | 60 |
| PEG-4000 | 5 |
| Sunpar® 2280 | 5 |
| Stearinsäure | 3 |
| ZnO | 5 |
| Schwefel | 0,7 |
| TBBS | 1 |
| TBzTD-70 | 3,5 |

Produktnamen und Hersteller der Kautschukmischungsbestandteile in Tabelle 2:

| | |
|---|---|
| Keltan® 2450 = | Ethylen-Propylen-Dien-Kautschuk (EPDM) der LANXESS Deutschland GmbH, Köln |
| N550 = | Industrie-Ruß Corax® N550 der Orion Engineered Carbons GmbH |
| PEG-4000 = | Polyethylenglykol, CAS Nr. 25322-68-3, Weichmacher der Carl Roth GmbH & Co.KG, Karlsruhe |
| Sunpar® 2280 = | Paraffinisches Weichmacheröl der Schill & Seilacher "Struktol" GmbH, Hamburg. Die Zusammensetzung wird von SUNOCO angegeben als Mischung sorgfältig raffinierter paraffinischer Öle, CAS Nr. 64742-62-7 / 64742-65-0. |
| Stearinsäure = | Stearinsäure Edenor® ST4A der BCD-Chemie GmbH, Hamburg |
| ZnO = | Zinkoxid Zinkweiss Rotsiegel der Grillo-Werke AG, Goslar |
| Schwefel | Mahlschwefel 90/95 als Vulkanisationsmittel der SOLVAY GmbH, Hannover |
| TBBS = | Vulkanisationsbeschleuniger Vulkacit NZ der LANXESS Deutschland GmbH, Köln, CAS Nr. 102-06-7. |
| TBzTD-70 = | Polymergebundener Vulkanisationsbeschleuniger Rhenogran® TBzTD-70 der Rhein Chemie Rheinau GmbH, Mannheim, enthält Tetrabenzylthiuramdisulfid CAS Nr. 10591-85-2. |

Die Herstellung der Kautschukmischungen erfolgte mittels eines Labor-Innenmischers Werner & Pfleiderer GK 5E.

**3. Herstellung der Verbundprobekörper aus Polyamid Komponente und Elastomer Komponente mittels 2-Komponenten-Spritzgießen:**

Zum Nachweis der Steigerung der Haftfestigkeit durch die erfindungsgemäße Werkstoffmodifikation wurden im Mehrkomponenten-Spritzgussprozess Verbundprobekörper hergestellt. Verwendet wurde eine 2-Komponenten-Spritzgussmaschine der Fa. Engel Austria GmbH, Schwertberg, Österreich, Typ Engel Combimelt 200H/200L/80, und als Spritzgusswerkzeug ein 2 Kavitäten Drehtellerwerkzeug.

Der 2K-Spritzgieß-Prozess wurde zweistufig betrieben, d.h. zuerst Herstellung der Polyamid Komponente durch Spritzgießen, trockene und staubfreie Lagerung der Polyamid Komponente für 24 h und erneutes Einlegen der Polyamid Komponente in die Elastomer Werkzeugkavität der 2K-Spritzgießmaschine zum Überspritzen der Kautschuk Komponente und anschließender Vulkanisation. Die Polyamid Komponente wurde vor dem erneuten Einlegen ins Werkzeug für 20 min auf die Elastomer Werkzeugtemperatur vortemperiert.

In der Thermoplast Kavität des Spritzgusswerkzeuges wurde eine 60 mm • 68 mm • 4 mm PA Platte durch Spritzgießen hergestellt. Die Kautschukkavität hatte die Abmaße 140 mm • 25 mm • 6 mm und bildete einen Überlapp zur Thermoplastplatte von 44,5 mm • 25 mm.

Die Polyamid Komponente der Verbundprobekörper wurde mit folgenden Spritzgieß-Einstellungen hergestellt: Zylindertemperatur 270 / 275 / 275 / 270 / 265°C, Einspritzgeschwindigkeit 15 cm$^3$/s, Werkzeugtemperatur 85°C, Nachdruck 450 bar, Nachdruckzeit 20 s, Kühlzeit 15 s.

Die Elastomer Komponente der Verbundprobekörper wurde mit folgenden Spritzgieß-Einstellungen hergestellt: Zylindertemperatur 100°C, Einspritzgeschwindigkeit 7 cm$^3$/s, Werkzeugtemperatur 165°C, Nachdruck 300 bar, Nachdruckzeit 90 s, Vulkanisationszeit 10 min.

**4. Prüfung der Verbundprobekörper aus Polyamid Komponente und Elastomer Komponente mittels Schälversuch:**

Nach einer Lagerung der Verbundprobekörper auf Basis der Zusammensetzungen Polyamid Komponente 1 bis 5 und Elastomer Komponente A von mindestens 24 Stunden wurden diese zur Prüfung der Haftfestigkeit einem 90° Schälversuch unterzogen. Der Schälversuch wurde in Anlehnung an DIN ISO 813 an einer Universalprüfmaschine Zwick Z010 der Zwick GmbH & Co. KG, Ulm, Deutschland durchgeführt. Hierbei wurde der Verbundprüfkörper unter einem Winkel von 90° in eine Zugprüfmaschine mit spezieller Vorrichtung zur Aufnahme der Thermoplast Komponente - hier Polyamid Komponente - eingespannt und auf Zug belastet. Die Vorkraft betrug 0,3 N, die Prüfgeschwindigkeit 100 mm/min. Die Haftfestigkeit ergibt sich aus der maximal gemessenen Kraft in N bezogen auf die Breite der Elastomer Komponente von 25 mm.

Die Ergebnisse der Schälversuche der Verbundprobekörper aus Polyamid Komponente 1 bis 5 und Elastomer Komponente A, also die resultierenden Haftfestigkeiten, sind in Tabelle 4 zusammengefasst.

**Tabelle 4: Ergebnisse der Schälversuche der Verbundprobekörper aus Polyamid Komponente und Elastomer Komponente, ausgedrückt in der resultierenden Haftfestigkeit**

| Elastomer Komponente | A |
|---|---|
| Polyamid Komponente | |
| 1 | 7,8 N/mm |
| 2 | 3,6 N/mm |
| 3 | 14,5 N/mm |
| 4 | 17,0 N/mm |
| 5 | 16,9 N/mm |

Die Verbundprobekörper aus Polyamid Komponente 1 und 2 zeigten Haftfestigkeiten von > 3 N/mm. Die Verbundprobekörper aus Polyamid Komponente 3, 4 und 5 wiesen signifikant höhere Haftfestigkeiten auf. Hier lagen die Haftfestigkeiten im Vergleich zu Polyamid Komponente 1 und 2 um ungefähr das Doppelte bis Fünffache höher.

Zusammenfassend zeigt also Tabelle 4, dass durch den erfindungsgemäßen Einsatz eines Gemisches aus Polyoctenamer und Polybutadien in der Polyamidkomponente die Haftfestigkeit signifikant gesteigert wurde.

**EP 3 237 204 B1**

**Patentansprüche**

1. Verbund in Direkthaftung aus mindestens einem Teilstück hergestellt aus mindestens einer Polyamidformmasse und mindestens einem Teilstück hergestellt aus wenigstens einem Elastomer wobei wenigstens ein Teilstück das Gemisch aus Polyoctenamer und Polybutadien enthält.

2. Verbund gemäß Anspruch 1, **dadurch gekennzeichnet, dass** Polybutadien mit einem zahlenmittleren Molekulargewicht Mn im Bereich von 800 bis 20.000 g/mol, und/oder mit einer dynamischen Viskosität, gemessen mit der Kegel-Platten-Methode nach DIN 53019, bei Normaldruck und bei einer Temperatur von 25°C im Bereich von 100 bis 15.000 mPas eingesetzt wird.

3. Verbund gemäß Anspruch 1 oder 2, **dadurch gekennzeichnet, dass** dieser das Gemisch im Teilstück hergestellt aus der Polyamidformmasse enthält.

4. Verbund gemäß einem der Ansprüche 1 bis 3, **dadurch gekennzeichnet, dass** die Polyamidformmasse zu mindestens 30 Gew.-%,eine Mischung von

   a) 60 bis 99,9 Gew.-Teile Polyamid sowie
   b) 0,1 bis 40 Gew.-Teile Polyoctenamer und Polybutadien enthält,

   die Summe der Gew.-Teile von a) und b) 100 in der Polyamidformmasse beträgt und das Elastomer Teilstück aus mit elementarem Schwefel als Vernetzungsmittel zu vernetzenden bzw. zu vulkanisierenden Kautschuk hergestellt wird,

5. Verbund gemäß einem der Ansprüche 1 bis 4, **dadurch gekennzeichnet, dass** als Polyoctenamer 1,8-trans-Polyoctenamer eingesetzt wird.

6. Verbund gemäß einem der Ansprüche 1 bis 5, **dadurch gekennzeichnet, dass** Polybutadien mit einem zahlenmittleren Molekulargewicht Mn im Bereich von 800 bis 20.000 g/mol und/oder mit einer dynamischen Viskosität, gemessen mit der Kegel-Platten-Methode nach DIN 53019, bei Normaldruck und bei einer Temperatur von 25°C im Bereich von 100 bis 15.000 mPas, bevorzugt im Bereich von 550 bis 4500 mPas, eingesetzt wird.

7. Verbund gemäß einem der Ansprüche 1 bis 6, **dadurch gekennzeichnet, dass** für das Elastomer Teilstück ein mit elementarem Schwefel als Vernetzungsmittel zu vernetzender Kautschuke aus der Gruppe Naturkautschuk, Ethylen-Propylen-Dien Kautschuk, Vinylaromat/Diolefin-Kautschuk, Polybutadienkautschuk, Polyisopren, Butylkautschuk, Halobutylkautschuk, Nitrilkautschuk, hydrierter Nitrilkautschuk, carboxylierter Butadien/Acrylnitril-Kautschuk und Polychloropren eingesetzt wird.

8. Verbund gemäß Anspruch 7, **dadurch gekennzeichnet, dass** als Vinylaromat/Diolefin-Kautschuk Styrol/Butadien-Kautschuk eingesetzt wird.

9. Verbund gemäß Anspruch 7, **dadurch gekennzeichnet, dass** als Halobutylkautschuk Chlor- oder Brombutylkautschuk eingesetzt wird.

10. Verbund gemäß einem der Ansprüche 1 bis 9, **dadurch gekennzeichnet, dass** als Polyamid PA6 oder PA66 eingesetzt werden.

11. Verbund gemäß einem der Ansprüche 1 bis 10, **dadurch gekennzeichnet dass** als Polyamid PA6 und als mit Schwefel zu vernetzender Kautschuk Ethylen-Propylen-Dien Kautschuk eingesetzt wird.

12. Verbund gemäß einem der Ansprüche 1 bis 11, **dadurch gekennzeichnet, dass** Polyoctenamer und Polybutadien im Massenverhältnis im Bereich von 1 Teil Polyoctenamer zu 20 Teilen Polybutadien bis 30 Teile Polyoctenamer zu 1 Teil Polybutadien eingesetzt werden.

13. Verbund gemäß einem der Ansprüche 1 bis 12, **dadurch gekennzeichnet, dass** dieser ohne zusätzlichen Haftvermittler auskommt.

14. Erzeugnisse enthaltend wenigstens einen Verbund gemäß einem der Ansprüche 1 bis 13.

**15.** Erzeugnisse gemäß Anspruch 14, **dadurch gekennzeichnet, dass** es sich um Dichtungen, Membranen, Gasdruckspeicher, Schläuche, Gehäuse für Motoren, Pumpen und elektrisch betriebene Werkzeuge, Walzen, Reifen, Kupplungen, Anschlagpuffer, Transportbänder, Treibriemen, Mehrschicht-Laminate und Mehrschicht-Folien sowie schall- oder schwingungsdämpfende Bauteile handelt.

**16.** Verfahren zur Herstellung eines Verbunds in Direkthaftung aus mindestens einem Teilstück hergestellt aus mindestens einer Polyamidformmasse und mindestens einem Teilstück hergestellt aus wenigstens einem Elastomer durch wenigstens ein Formgebungsverfahren der Reihe Extrusion, Flachfolienextrustion, Folienblasen, Extrusionsblasformen, Coextrusion, Kalandrieren, Gießen, Pressverfahren, Spritzprägeverfahren, Transferpressverfahren, Transferspritzpressverfahren oder Spritzgießen oder dessen Sonderverfahren, indem entweder das Teilstück aus der Polyamidformmasse mit einer Kautschuk Komponente beaufschlagt und den Vulkanisationsbedingungen des Kautschuks ausgesetzt wird, oder das Teilstück aus Kautschuk mit einer Polyamidformmasse beaufschlagt wird und wenigstens die Formmasse für ein Teilstück, vorzugsweise die Polyamidformmasse, das Gemisch von Polyoctenamer und Polybutadien enthält.

**17.** Verwendung eines Gemisches von Polyoctenamer und Polybutadien zur Herstellung eines Verbunds in Direkthaftung aus mindestens einem Teilstück aus mindestens einer Polyamidformmasse und mindestens einem Teilstück aus wenigstens einem Elastomer, **dadurch gekennzeichnet, dass** das Gemisch in der Formmasse wenigstens eines Teilstücks, vorzugsweise in der Polyamidformmasse, eingesetzt wird.

**Claims**

**1.** Directly adhering composite composed of at least one part produced from at least one polyamide molding compound and at least one part produced from at least one elastomer, wherein at least one part comprises the mixture of polyoctenamer and polybutadiene.

**2.** Composite according to Claim 1, **characterized in that** polybutadiene having a number-average molecular weight Mn in the range from 800 to 20 000 g/mol and/or having a dynamic viscosity measured by the cone-plate method to DIN 53019 at standard pressure and at a temperature of 25°C in the range from 100 to 15 000 mPas is used.

**3.** Composite according to Claim 1 or 2, **characterized in that** it comprises the mixture in the part produced from the polyamide molding compound.

**4.** Composite according to any of Claims 1 to 3, **characterized in that** the polyamide molding compound comprises, to an extent of at least 30% by weight, a mixture of

a) 60 to 99.9 parts by weight of polyamide and
b) 0.1 to 40 parts by weight of polyoctenamer and polybutadiene,

the sum total of the parts by weight of a) and b) is 100 in the polyamide molding compound and the elastomer part is produced from rubber to be crosslinked or vulcanized with elemental sulfur as crosslinking agent.

**5.** Composite according to any of Claims 1 to 4, **characterized in that** the polyoctenamer used is 1,8-trans-polyoctenamer.

**6.** Composite according to any of Claims 1 to 5, **characterized in that** polybutadiene having a number-average molecular weight Mn in the range from 800 to 20 000 g/mol and/or having a dynamic viscosity measured by the cone-plate method to DIN 53019 at standard pressure and at a temperature of 25°C in the range from 100 to 15 000 mPas, preferably in the range from 550 to 4500 mPas, is used.

**7.** Composite according to any of Claims 1 to 6, **characterized in that**, for the elastomer part, a rubber to be crosslinked with elemental sulfur as crosslinking agent from the group of natural rubber, ethylene-propylene-diene rubber, vinylaromatic/diolefin rubber, polybutadiene rubber, polyisoprene, butyl rubber, halobutyl rubber, nitrile rubber, hydrogenated nitrile rubber, carboxylated butadiene/acrylonitrile rubber and polychloroprene is used.

**8.** Composite according to Claim 7, **characterized in that** the vinylaromatic/diolefin rubber used is styrene/butadiene rubber.

9. Composite according to Claim 7, **characterized in that** the halobutyl rubber used is chloro- or bromobutyl rubber.

10. Composite according to any of Claims 1 to 9, **characterized in that** the polyamide used is PA6 or PA66.

11. Composite according to any of Claims 1 to 10, **characterized in that** the polyamide used is PA6 and the rubber to be crosslinked with sulfur used is ethylene-propylene-diene rubber.

12. Composite according to any of Claims 1 to 11, **characterized in that** polyoctenamer and polybutadiene are used in a mass ratio in the range from 1 part polyoctenamer:20 parts polybutadiene to 30 parts polyoctenamer:1 part polybutadiene.

13. Composite according to any of Claims 1 to 12, **characterized in that** it does not need any additional adhesion promoter.

14. Product comprising at least one composite according to any of Claims 1 to 13.

15. Product according to Claim 14, **characterized in that** it is a seal, membrane, gas pressure storage means, hose, housing for a motor, pump or electrically operated tool, roller, tire, coupling, buffer stop, conveyor belt, drive belt, multilayer laminate or multilayer film, or a sound- and vibration-dampening component.

16. Process for producing a directly adhering composite composed of at least one part produced from at least one polyamide molding compound and at least one part produced from at least one elastomer by at least one shaping method from the group of extrusion, flat film extrusion, film blowing, extrusion blow molding, coextrusion, calendering, casting, compression methods, injection embossing methods, transfer compression methods, transfer injection compression methods or injection molding or special methods thereof, either by contacting the part composed of the polyamide molding compound with a rubber component and exposing it to the vulcanization conditions of the rubber, or by contacting the part composed of rubber with a polyamide molding compound, with at least the molding compound or a part, preferably the polyamide molding compound, comprising the mixture of polyoctenamer and polybutadiene.

17. Use of a mixture of polyoctenamer and polybutadiene for production of a directly adhering composite composed of at least one part composed of at least one polyamide molding compound and at least one part composed of at least one elastomer, **characterized in that** the mixture is used in the molding compound of at least one part, preferably in the polyamide molding compound.

## Revendications

1. Composite en adhésion directe constitué par au moins une partie fabriquée en au moins un matériau de moulage polyamide et au moins une partie fabriquée en au moins un élastomère, au moins une partie contenant le mélange de polyocténamère et de polybutadiène.

2. Composite selon la revendication 1, **caractérisé en ce qu'**un polybutadiène ayant un poids moléculaire moyen en nombre Mn dans la plage allant de 800 à 20 000 g/mol et/ou ayant une viscosité dynamique, mesurée avec la méthode à cône et plan selon DIN 53019, à pression normale et à une température de 25 °C, dans la plage allant de 100 à 15 000 mPas, est utilisé.

3. Composite selon la revendication 1 ou 2, **caractérisé en ce que** celui-ci contient le mélange dans la partie fabriquée en le matériau de moulage polyamide.

4. Composite selon l'une quelconque des revendications 1 à 3, **caractérisé en ce que** le matériau de moulage polyamide contient au moins 30 % en poids d'un mélange de :

   a) 60 à 99,9 parties en poids de polyamide et
   b) 0,1 à 40 parties en poids de polyocténamère et de polybutadiène,

   la somme des parties en poids de a) et b) étant de 100 dans le matériau de moulage polyamide, et la partie élastomère est fabriquée en un caoutchouc à réticuler ou à vulcaniser avec du soufre élémentaire en tant qu'agent de réticulation.

**5.** Composite selon l'une quelconque des revendications 1 à 4, **caractérisé en ce que** le 1,8-trans-polyocténamère est utilisé en tant que polyocténamère.

**6.** Composite selon l'une quelconque des revendications 1 à 5, **caractérisé en ce qu'**un polybutadiène ayant un poids moléculaire moyen en nombre Mn dans la plage allant de 800 à 20 000 g/mol et/ou ayant une viscosité dynamique, mesurée avec la méthode à cône et plan selon DIN 53019, à pression normale et à une température de 25 °C, dans la plage allant de 100 à 15 000 mPas, de préférence dans la plage allant de 550 à 4 500 mPas, est utilisé.

**7.** Composite selon l'une quelconque des revendications 1 à 6, **caractérisé en ce que**, pour la partie élastomère, un caoutchouc à réticuler avec du soufre élémentaire en tant qu'agent de réticulation du groupe constitué par le caoutchouc naturel, le caoutchouc d'éthylène-propylène-diène, le caoutchouc de composé aromatique de vinyle/dioléfine, le caoutchouc de polybutadiène, le polyisoprène, le caoutchouc de butyle, le caoutchouc d'halobutyle, le caoutchouc de nitrile, le caoutchouc de nitrile hydrogéné, le caoutchouc de butadiène/acrylonitrile carboxylé et le polychloroprène, est utilisé.

**8.** Composite selon la revendication 7, **caractérisé en ce qu'**un caoutchouc de styrène/butadiène est utilisé en tant que caoutchouc de composé aromatique de vinyle/dioléfine.

**9.** Composite selon la revendication 7, **caractérisé en ce qu'**un caoutchouc de chloro- ou de bromobutyle est utilisé en tant que caoutchouc d'halobutyle.

**10.** Composite selon l'une quelconque des revendications 1 à 9, **caractérisé en ce que** du PA6 ou du PA66 est utilisé en tant que polyamide.

**11.** Composite selon l'une quelconque des revendications 1 à 10, **caractérisé en ce que** du PA6 est utilisé en tant que polyamide et un caoutchouc d'éthylène-propylène-diène est utilisé en tant que caoutchouc à réticuler avec du soufre.

**12.** Composite selon l'une quelconque des revendications 1 à 11, **caractérisé en ce que** le polyocténamère et le polybutadiène sont utilisés en un rapport en masse dans la plage allant de 1 partie de polyocténamère sur 20 parties de polybutadiène à 30 parties de polyocténamère sur 1 partie de polybutadiène.

**13.** Composite selon l'une quelconque des revendications 1 à 12, **caractérisé en ce que** celui-ci se passe de promoteurs d'adhésion supplémentaires.

**14.** Produits contenant au moins un composite selon l'une quelconque des revendications 1 à 13.

**15.** Produits selon la revendication 14, **caractérisés en ce qu'**il s'agit de joints, de membranes, de réservoirs à gaz sous pression, de tuyaux, de boîtiers pour moteurs, de pompes et d'outils électriques, de cylindres, de pneus, de pièces de couplage, de tampons de butée, de bandes de transport, de courroies d'entraînement, de stratifiés multicouches et de films multicouches, ainsi que de composants d'isolation acoustique ou de vibrations.

**16.** Procédé de fabrication d'un composite en adhésion directe constitué par au moins une partie fabriquée en au moins un matériau de moulage polyamide et au moins une partie fabriquée en au moins un élastomère, par au moins un procédé de façonnage de la série constituée par l'extrusion, l'extrusion de films plats, le soufflage de films, le moulage par extrusion-soufflage, la coextrusion, le calandrage, le coulage, les procédés de compression, les procédés de moulage par injection-compression, les procédés de compression par transfert, les procédés d'injection-compression par transfert ou le moulage par injection ou ses procédés particuliers, par chargement de la partie en le matériau de moulage polyamide avec un composant caoutchouc et exposition aux conditions de vulcanisation du caoutchouc, ou chargement de la partie en caoutchouc avec un matériau de moulage polyamide, au moins le matériau de moulage pour une partie, de préférence le matériau de moulage polyamide, contenant le mélange de polyocténamère et polybutadiène.

**17.** Utilisation d'un mélange de polyocténamère et polybutadiène pour la fabrication d'un composite en adhésion directe constitué par au moins une partie en au moins un matériau de moulage polyamide et au moins une partie en au moins un élastomère, **caractérisée en ce que** le mélange est utilisé dans le matériau de moulage d'au moins une partie, de préférence dans le matériau de moulage polyamide.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2014096392 A1
- EP 0508056 A1
- DE 2034989 A1
- EP 0603611 A1
- US 4826721 A
- DE 102011084519 A1

### In der Beschreibung aufgeführte Nicht-Patentliteratur

- **J. SCHNETGER.** Lexikon der Kautschuktechnik. Hüthig Verlag Heidelberg, 2004, 203
- **B. CROWTHER.** Handbook of Rubber Bonding. iSmithers Rapra Publishing, 2001, 3-55
- *CHEMICAL ABSTRACTS,* 28730-09-8
- **A. DRÄXLER.** Kautschuk, Gummi, Kunststoffe. 1981, 185-190
- *CHEMICAL ABSTRACTS,* 25267-51-0
- **AG, MARL.** Handbook of Elastomers. Marcel Dekkers Inc, 2001, 698-703
- *CHEMICAL ABSTRACTS,* 9003-17-2
- **HOUBEN-WEYL.** Methoden der Organischen Chemie. Thieme Verlag, 1987, vol. E 20, 798-812
- Ullmann's Encyclopedia of Industrial Chemistry. VCH Verlagsgesellschaft mbH, 1993, vol. A 23, 239-364
- **H.-G. ELIAS.** Macromolecules, Volume 2: Industrial Polymers and Syntheses. WILEY-VCH Verlag GmbH, 2007, vol. 2, 242-245
- **H.-G. ELIAS.** Macromolecules, Volume 4: Applications of Polymers. WILEY-VCH Verlag GmbH, 2007, vol. 4, 242-245
- **F. RÖTHEMEYER ; F. SOMMER.** Kautschuktechnologie. Carl Hanser Verlag, 2006, 315-317
- **J. SCHNETGER.** Lexikon der Kautschuktechnik. Hüthig Verlag Heidelberg, 2004, 82-83
- **F. RÖTHEMEYER ; F. SOMMER.** Kautschuktechnologie. Carl Hanser Verlag, 2006, 291-295
- **J. SCHNETGER.** Lexikon der Kautschuktechnik. Hüthig Verlag Heidelberg, 2004, 375-377
- *CHEMICAL ABSTRACTS,* 9006-04-6
- **J. SCHNETGER.** Lexikon der Kautschuktechnik. Hüthig Verlag Heidelberg, 2004, 331-338
- *CHEMICAL ABSTRACTS,* 25038-36-2
- **J. SCHNETGER.** Lexikon der Kautschuktechnik. Hüthig Verlag Heidelberg, 2004, 144-146
- *CHEMICAL ABSTRACTS,* 9003-55-8
- **I. FRANTA.** Elastomers and Rubber Compounding Materials. Elsevier, 1989, 73-74, 92-94
- **HOUBEN-WEYL.** Methoden der Organischen Chemie. Thieme Verlag, 1987, vol. E 20, 114-134
- Ullmann's Encyclopedia of Industrial Chemistry. VCH Verlagsgesellschaft mbH, 1993, vol. A 23, 240-364
- **K.-H. NORDSIEK ; K.-H. KIEPERT.** *GAK Kautschuk Gummi Kunststoffe,* 1980, vol. 33 (4), 251-255
- Ullmann's Encyclopedia of Industrial Chemistry. VCH Verlagsgesellschaft mbH, 1993, vol. A 23, 247-251
- *CHEMICAL ABSTRACTS,* 25038-44-2
- *CHEMICAL ABSTRACTS,* 104389-31-3
- **HOUBEN-WEYL.** Methoden der Organischen Chemie. Thieme Verlag, 1987, vol. E 20, 822-840
- *CHEMICAL ABSTRACTS,* 9003-18-3
- *CHEMICAL ABSTRACTS,* 9005-98-5
- **J. SCHNETGER.** Lexikon der Kautschuktechnik. Hüthig Verlag Heidelberg, 2004, 28-29
- **J. SCHNETGER.** Lexikon der Kautschuktechnik. Hüthig Verlag Heidelberg, 2004, 30
- **F. RÖTHEMEYER ; F. SOMMER.** Kautschuktechnologie. Carl Hanser Verlag, 2006, 112
- **J. SCHNETGER.** Lexikon der Kautschuktechnik. Hüthig Verlag Heidelberg, 2004, 69-71
- *CHEMICAL ABSTRACTS,* 68081-82-3
- **J. SCHNETGER.** Lexikon der Kautschuktechnik. Hüthig Verlag Heidelberg, 2004, 75
- *CHEMICAL ABSTRACTS,* 308063-43-6
- **J. SCHNETGER.** Lexikon der Kautschuktechnik. Hüthig Verlag Heidelberg, 2004, 66-67
- *CHEMICAL ABSTRACTS,* 9010-98-4
- **J. SCHNETGER.** Lexikon der Kautschuktechnik. Hüthig Verlag Heidelberg, 2004, 78-81
- **F. RÖTHEMEYER ; F. SOMMER.** Kautschuktechnologie. Carl Hanser Verlag, 2006, 15-163
- *CHEMICAL ABSTRACTS,* 56-81-5
- *CHEMICAL ABSTRACTS,* 7704-34-9
- **STICHWORT.** Schwefel'' des Online Römpp Chemie Lexikons. Georg Thieme Verlag Stuttgart, August 2004

- *CHEMICAL ABSTRACTS,* 103-34-4
- *CHEMICAL ABSTRACTS,* 23847-08-7
- *CHEMICAL ABSTRACTS,* 102-77-2
- *CHEMICAL ABSTRACTS,* 137-26-8
- *CHEMICAL ABSTRACTS,* 97-77-8
- *CHEMICAL ABSTRACTS,* 120-54-7
- **J. SCHNETGER.** Lexikon der Kautschuktechnik. Hüthig Verlag Heidelberg, 2004, 472
- **F. RÖTHEMEYER ; F. SOMMER.** Kautschuktechnologie. Carl Hanser Verlag, 2006, 309-310
- **J. SCHNETGER.** Lexikon der Kautschuktechnik. Hüthig Verlag Heidelberg, 2004, 514-515, 537-539, 586-589
- *CHEMICAL ABSTRACTS,* 1314-13-2
- *CHEMICAL ABSTRACTS,* 57-11-4
- *CHEMICAL ABSTRACTS,* 149-57-5
- *CHEMICAL ABSTRACTS,* 557-05-1
- Ullmann's Encyclopedia of Industrial Chemistry. VCH Verlagsgesellschaft mbH, 1993, 635-645
- *CHEMICAL ABSTRACTS,* 112926-00-8
- *CHEMICAL ABSTRACTS,* 7631-86-9
- *CHEMICAL ABSTRACTS,* 1333-86-4
- Ullmann's Encyclopedia of Industrial Chemistry. VCH Verlagsgesellschaft mbH, 1993, vol. A 5, 95-158
- **J. SCHNETGER.** Lexikon der Kautschuktechnik. Hüthig Verlag Heidelberg, 2004, 1-2
- **F.RÖTHEMEYER ; F.SOMMER.** Kautschuktechnologie. Carl Hanser Verlag, 2006, 329-337
- **F. RÖTHEMEYER ; F. SOMMER.** Kautschuktechnologie. Carl Hanser Verlag, 2006, 337-338
- **F. RÖTHEMEYER ; F. SOMMER.** Kautschuktechnologie. Carl Hanser Verlag, 2006, 338-344
- **F. RÖTHEMEYER ; F. SOMMER.** Kautschuktechnologie. Carl Hanser Verlag, 2006, 345-346
- **F. RÖTHEMEYER ; F. SOMMER.** Kautschuktechnologie. Carl Hanser Verlag, 2006, 345
- **F. RÖTHEMEYER ; F. SOMMER.** Kautschuktechnologie. Carl Hanser Verlag, 2006, 346
- **J. SCHNETGER.** Lexikon der Kautschuktechnik. Hüthig Verlag Heidelberg, 2004, 498, , 528
- **F. RÖTHEMEYER ; F. SOMMER.** Kautschuktechnologie. Carl Hanser Verlag, 2006, 823-827
- **J. SCHNETGER.** Lexikon der Kautschuktechnik. Hüthig Verlag Heidelberg, 2004, 322-323, 618
- **J. SCHNETGER.** Lexikon der Kautschuktechnik. Hüthig Verlag Heidelberg, 2004, 275, , 315-318
- *CHEMICAL ABSTRACTS,* 9011-52-3
- *CHEMICAL ABSTRACTS,* 26098-55-5
- *CHEMICAL ABSTRACTS,* 25035-04-5
- *CHEMICAL ABSTRACTS,* 24937-16-4
- **H. DOMININGHAUS.** Die Kunststoffe und ihre Eigenschaften. VDI-Verlag, 1976, 272 ff
- *CHEMICAL ABSTRACTS,* 25038-54-4
- *CHEMICAL ABSTRACTS,* 32131-17-2
- Nylon Plastics Handbook. Hanser-Verlag, 1995, 17-27
- Kunststoff-Handbuch. Polyamide. Carl Hanser Verlag, 1998, vol. 3/4, 22-57
- *CHEMICAL ABSTRACTS,* 105-60-2
- *CHEMICAL ABSTRACTS,* 3323-53-3
- Dry Blend, siehe Die Kunststoffe - Chemie, Physik. **TROCKENMISCHUNG.** Technologie. Carl Hanser Verlag, 1990, 266
- Plastics Processing. Ullmann's Encyclopedia of Industrial Chemistry. Wiley-VCH Verlag, 2011, vol. 28, 169-177
- **F. RÖTHEMEYER ; F. SOMMER.** Kautschuktechnologie. Carl Hanser Verlag, 2006, 597-727
- Plastics Processing. Ullmann's Encyclopedia of Industrial Chemistry. Wiley-VCH Verlag, 2011, vol. 28, 177
- **F. RÖTHEMEYER ; F. SOMMER.** Kautschuktechnologie. Carl Hanser Verlag, 2006, 852-853
- **F. RÖTHEMEYER ; F. SOMMER.** Kautschuktechnologie. Carl Hanser Verlag, 2006, 977-978
- **DIE KUNSTSTOFFE.** Chemie, Physik, Technologie. Carl Hanser Verlag, 1990, 422-480
- **F. RÖTHEMEYER ; F. SOMMER.** Kautschuktechnologie. Carl Hanser Verlag, 2006, 729-738
- Plastics Processing. Ullmann's Encyclopedia of Industrial Chemistry. Wiley-VCH Verlag, 2011, vol. 28, 167
- Plastics Processing. Ullmann's Encyclopedia of Industrial Chemistry. Wiley-VCH Verlag, 2011, vol. 28, 187
- **F. RÖTHEMEYER ; F. SOMMER.** Kautschuktechnologie. Carl Hanser Verlag, 2006, 738-739
- **F. RÖTHEMEYER ; F. SOMMER.** Kautschuktechnologie. Carl Hanser Verlag, 2006, 740-753
- Plastics Processing. Ullmann's Encyclopedia of Industrial Chemistry. Wiley-VCH Verlag, 2011, vol. 28, 181-189
- **F. JOHANNABER ; W. MICHAELI.** Handbuch Spritzgießen. Carl Hanser Verlag, 2004, 506-523
- Handbuch Kunststoff-Verbindungstechnik. Carl Hanser Verlag, 1990, 506-523
- Polyamiden siehe auch Kunststoff-Handbuch. Polyamide. Carl Hanser Verlag, 1998, vol. 3/4, 315-352
- **F. RÖTHEMEYER ; F. SOMMER.** Kautschuktechnologie. Carl Hanser Verlag, 2006, 755-815
- *CHEMICAL ABSTRACTS,* 25322-68-3
- *CHEMICAL ABSTRACTS,* 64742-62-7
- *CHEMICAL ABSTRACTS,* 102-06-7
- *CHEMICAL ABSTRACTS,* 10591-85-2